Europäisches Patentamt

European Patent Office

Office européen des brevets

(19)

(11) **EP 0 699 320 B1**

(12) **EUROPEAN PATENT SPECIFICATION**

(45) Date of publication and mention
of the grant of the patent:
**23.07.2003 Bulletin 2003/30**

(21) Application number: **94916719.1**

(22) Date of filing: **10.05.1994**

(51) Int Cl.[7]: **G06F 11/36**

(86) International application number:
**PCT/US94/05182**

(87) International publication number:
**WO 94/027213 (24.11.1994 Gazette 1994/26)**

(54) **METHOD AND APPARATUS FOR AUTOMATIC ANALYSIS OF A TARGET PROGRAM.**

VERFAHREN UND VORRICHTUNG ZUR AUTOMATISCHEN ANALYSE EINES ZIELPROGRAMMS

PROCEDE ET DISPOSITIF POUR L'ANALYSE AUTOMATIQUE D'UN PROGRAMME CIBLE.

(84) Designated Contracting States:
**AT BE CH DE DK ES FR GB GR IE IT LI LU MC NL
PT SE**

(30) Priority: **10.05.1993 US 59208**

(43) Date of publication of application:
**06.03.1996 Bulletin 1996/10**

(73) Proprietor: **Thinking Software, Inc.
Cupertino, CA 95014 (US)**

(72) Inventor: **Shapiro, Benjamin V.
West Caldwell, NJ 07006 (US)**

(74) Representative: **Sigh, Erik et al
Zacco Denmark A/S
Hans Bekkevolds Allé 7
2900 Hellerup (DK)**

(56) References cited:
JP-A- 2 118 852          JP-A- 62 166 444
US-A- 4 720 778

• TECHNIQUE ET SCIENCE INFORMATIQUES,
vol. 9, no. 2, 1 January 1990, pages 150-156,
XP000291978 RAITHER B ET AL: "IDEFIX: A
TOOL FOR DEBUGGING ADA TASKS IN A
REAL-TIME ENVIRONMENT"
• EUROMICRO SYMPOSIUM ON
MICROPROCESSING AND
MICROPROGRAMMING, vol. 24 1 - 5, 29 August
1988 - 1 October 1988, ZURICH CH, pages
809-818, XP000092489 VALMARI A: "PC-RIMST -
A TOOL FOR VALIDATING CONCURRENT
PROGRAM DESIGNS"
• ACM SIGPLAN NOTICES, vol. 26, no. 12, 1
December 1991, pages 68-75, XP000331543
FRANCIONI J M ET AL: "DEBUGGING
PARALLEL PROGRAMS USING SOUND"

Description

## BACKGROUND OF THE INVENTION

*Field of the Invention:*

This invention relates to a method of static and dynamic analysis of computer programs allowing to minimize an uncertainty about the location of fault(s) that are the source of the programs failure(s) as well as places for required modifications in the case of changed specifications.

The invented processes also provide an original and very high level interface between the user of a target computer software system and its internal processes, which interface allows for a very effective method of activating the target software analysis.

The same interface allows an introduction of a very high level programming language for systems modifications and forward development, that we call Result Oriented Programming (ROP).

The following description also provides an alternative to the traditional form of computer software processes object code by proposing an eX Object Code, where eX stands for eXpert Program Diagnosis.

eX Object Code is more suitable for the programs analysis, both static and dynamic and for the program maintenance. It eases and sometime eliminates recompiling and re-linking of the target process code as a result of this process modifications.

*Description of the Related Art:*

Several decades of computer software engineering have shown that:

a: there is no automated way to prove, that computer program process will always yield the correct or desired result;
b: therefore there is no "error free" software, that is the software is only "correct" to the degree that it was tested, assuming that the testing was correct;
c: an exhaustive testing is not feasible on anything but the simplest software;
d: present software engineering does not provide anything analogous to the hardware safety margins and one fault often brings an entire system down;
e: when the existence of a failure is realized, during the test or production, locating its cause (fault) is often extremely difficult.

This is, because the software is fundamentally different from the hardware in that it does not obey the same simplified rules of proximity of cause and effect. That is the software error (fault) is not somewhere close to its manifestation (failure), but can be located almost anywhere in the system.

An industry average is 5 to 10 faults per 1000 lines of code for the systems that have past the testing and are in production. For the reasons of difficulties of locating faults, many failures are put up with. Programmers and their managers are afraid to touch the code since any attempt to improve or modify the code may instead introduce new errors and further break the system.

The following quote made in 1988 is still valid in 1993:

"In principle it could work that way. The defect rate for carefully made programs can be about 5 faults/1,000 lines, so that 1 M-line program might have only 5,000 problems. Even supposing that unique test point is needed to expose each one, thousands of trials are not impractical. The fallacy may be obvious, but it underlines our intuition about tests more than we like to admit: the points may be few, but we do not know how to find them. Worse, we know no semantic way to search, no way to judge points selected, and no way to decide when to stop. So when 5,000 points have been tried and no errors found, we do not know if there are none, or if 10 remain, or 5,000." ... From the technical side, what testing needs most is a sound fundamental theory,..."

"Special section on software testing"
Communications of the ACM, June 1988.

Software "Re-engineering" became a buzzword of 1990's. IBM System Journal, Vol. 28, No 2,1989 has a title: "Program understanding: Challenge for 1990's".

According to IBM's study $30 billion was spent worldwide on software maintenance and that number was growing with the accumulation of new software systems and "aging" of old software.

According to the MIT study for every $1 allocated for new software project, $9 will be spent for that project maintenance.

Software Magazine, page 95 from November 1990, mentions a study of Price Waterhouse that evaluated an existence of $100 billion a year market for system work to correct errors in existing systems.

The present art of software debugging is based on the **"Control Break"** technique. This is how it works. The analysis is activated from the source by setting "control breaks" by one of the following methods:

a: the programmer studies the source and manually sets the control break by positioning the cursor or other pointing device on the specific source code line;
   or
b: the programmer commands a debugging tool to animate (trace) the code by interpreting it in a speed slow enough to be able visually trace the execution by automatically highlighting currently active line of source code. At this mode a break is available after each executed source instruction;
   or
c: a control break is commanded to be set at each instruction of specific type, for example after each input statement or before each call (perform) statement;

The purpose of a control break is to temporarily pause an execution process in order to manually examine the value of program variables.

The following assumptions are taken when "control break" technique is used:

(i) a programmer sets control breaks at relevant source code locations;
(ii) assuming (i), a programmer knows what variables are to be investigated;
(iii) assuming (i) and (ii), a programmer makes a correct decision on what is the cause of a failure;

The probability of correct manual analysis is, therefore, equal to the product of probabilities of (i), (ii), and (iii). Let say, for example, that the probability of correct decisions on each of these steps is 10%, then the probability of correct result of the manual analysis would be 0.1%

As we see, the traditional "control break" technique of trying to locate the cause of a failure is not at all automated and introduces all the possibilities for human error during the cognitive decisions of:

- were to check?;
- what to check?;
- what does it mean?

Some work has been done in the area of automatic determination of what source code instructions have and what have not been covered during test process execution.

US Patent 4,853,851 to Horsch discloses a "System for Determining The Code Coverage of a Tested Program Based Upon Static and Dynamic Analysis Recordings" that is the method of measuring the ratio between the number of instructions executed in a computer program during its testing and the total number of instructions in that program.

Although generally the more statements are covered during the test, the better, the fact, that a process step was executed does not provide information on its validity:

- the particular executed statement may have been constructed wrong in the first place,
- the particular statement could be executed in a wrong place or at a wrong time;
- in addition, the particular statement may have been a statement, that does not change or contributed to the process result;

US Patent 4,802,116 to Ward et al. discloses a "Programmed Controller" which controls a machine process and facilitates its debugging. The application programs here are specifically designed to simulate specific control schemes for sections of the machine by being organized into one or more separate loops. The built-in control mechanism records the states of these loops along with the conditions responsible for the transitions between those states.

This technology is limited by application to only those processes that are specially coded by very specific syntax rules as consisting of independent loops, where the means of tracing the states of these loops are pre-coded in the programs controlling the process. The recording of the process history is done by recording a sequence representing each block of statements and each logic condition statement connecting different blocks. The analysis of the system faults is not automated to the degree that eX Machine provides, since it is done not by the reference to the actual process result (as in case of eX Machine), but by an analysis of the recorded sequence of program states and therefore does not provide such a high level of reasoning and user interface as does eX Machine.

The prior art did not present generic processes, that would be able to automatically locate the position of logic faults in a computer software even with the degree of uncertainty within a defined area. This was due to the general belief, that such automation is not feasible according to the following:

1. as was mentioned before, the software unlike hardware does not obey the same rule of proximity of cause and effect, and software faults responsible for a specific failure could be almost anywhere within the software system;

2. a software system does not know, what is expected from it as a result, and therefore, it can not recognize a failure (unexpected result), unless expected results are encoded in the system. The work was done demonstrating that pre-coding program specifications is a task not different in its complexity and error prone character from the programming this software functionality in the first place.

In addition, trying to eliminate software failures by pre-coding system specifications would overlook the following characteristics of software failures, as a software failure can not be absolutely defined:

- a software failure is relative to changed expectations (specifications) on input and output;
- a software failure is relative to changed operating environment;
- a software failure is relative to individual expectations of system results, when those expectations are not explicitly documented;

We would add here that the problem in locating a software fault lies in the very relativity of correctness of the elementary software process (program source statement).

Elementary process lives in three dimensions. First two are the two dimensions of program's algorithm space, that could be understood by looking at the flow-chart. Static program analysis is performed in this two dimensional space. The third dimension is a time within the program execution process. Dynamic analysis must operate in space and in time.

The difference between program static and program dynamic analysis is as big as the difference between classical and contemporary mechanics:

As *"nobody has ever noticed a place except at a time, or a time except at a place" (H.Minkowsky, "Space and Time"),* an elementary process within a program that has its own hard coded position within the program's algorithm space, has a meaning only at a time when and if the programs control will come to it, which meaning is different at different times within the process.

That difference in elementary process meaning is conditioned by the potential difference in the execution histories before and after the executions of this elementary process (statement) at different times within the process.

The prior art was missing the following major technological steps necessary in order to be able to automate locating of the logic faults in computer software and generally improve program's dynamic analysis:

I) new theory on automating program analysis that introduces the attributes of its relativity and makes automatic logic analysis feasible;

I) a technology, based on the mentioned theory, that consists of processes operating on the knowledge about target process elements *"correctness"* and its *"uncertainty",* having a mechanism for automatic minimizing of this uncertainty, which processes allow for accumulating and propagating mentioned knowledge between target process elements, thus automatically increasing the "intelligence" of the target process model;

In later descriptions we will use the term "knowledge" to describe the understanding of target process element "correctness" or its "uncertainty" at the specific instances within the target process.

III) a technology, based on the mentioned theory, that allows high level interface between a user and the target software system that would allow the analytical tool to be automatically initiated at the relevant place and time with regard to the relevant target of analysis, i.e. with regard to the relevant program statements and relevant system behavior;

**(Automatic analysis can not be built on the cognitive challenge of trying to understand, where to set the control breaks).**

We envision the mentioned technological steps to be an integral part of the future operating systems. Analogous to the static syntax analysis of the compiler, such operating system will provide dynamic analysis of the target system behavior to the degree of being able to locate, with the growing level of certainty, the position of logic fault.

The analog of the different degrees of uncertainty is present in the compiler diagnosis as well: the compiler does not detect, that instead of character 'a' there should be a character 'b'; instead it reports, that the problem of a specific type exists within a specific area of a statement or of group of statements.

Without such partially uncertain analysis of the compiler we would not be able to deal with syntax faults of any relatively complex code.

The same automation was long due in the area of logic faults analysis. eX Machine offers this kind of automation in a far more complicated, and prior to the present invention not automated, area - locating position and type of logic error.

Previously mentioned technological steps had to be built on the basis of very generic but very strict model representing process algorithm, which model could be extracted from any existing software system.

In the following description by the term eX Machine we will understand the combination of the following processes, that will be described further:

[] "Pseudo parallel" (i.e. "Delayed Sequential" or "Delayed Parallel") synchronized execution of eX model and the target process within the traditional object code implementation;

or

Execution of eX model as a component of the target process object code within eX Object Code implementation;

[] Building System Input and System Output process synchronized maps;

[] running eX Analytical Engine, that:

- creates a knowledge of cause - effect relationships and their correctness for the events of execution of the target process elements;
- propagates this knowledge between the target process elements;
- using the accumulated knowledge of the target process, defines the area of fault position, or area that must be modified as a result of changed system expectations;

The essence of eX Machine technology benefits can be briefly described as follows:

In order to locate the fault in a program, or in general to understand the program, a programmer traditionally has to undertake substantial detective work. In addition to being subjected to human error and therefore having a potential of creating secondary faults due to the errors in the manual analysis, this manual program analysis may often be too complicated to be performed.

Our invention undertakes the detective work and automates a big part of manual analysis. The analysis here is done with the precision, that grows with the accumulation of knowledge of the target process behavior. The core of the invention is being able to accumulate and use this knowledge. The invention is studying the events and their effects within the target process.

If an event - something that has actual existence - is understood as an effect, produced by other events - a condition or occurrence traceable to a cause, then we can say, that our invention operates by studying the effects of the elementary process events, i.e. cause-effect relationship within the target process.

Instead of analyzing the target process the traditional way, i.e. going forward (tracing the target process) the invention is producing the analysis (automatically) by going backward from the effects.

This approach is exactly what the human mind is used to, i.e. we look at the effects that surround us and try to build an understanding of the internal processes causing those effects, i.e. trying to build cause-effect understanding going backwards from an effect to a cause.

The fact, that the computer program was built by a human, should not change the way we must understand it - starting the analysis from the effects, not by simply tracing the elementary steps forward.

Since the target process results are the final effects of the target process, being able to trace those final effects to their causes allows an original interface, where the program analysis is originated from the program output.

Within our invention an "expected resulting effect justifies the chain of intermediate effects" or "expected resulting event justifies the chain of intermediate events".

This allows non-optimal calculations, which definition is relative any way, but brings the basic principles for calculations approval (effects approval) and therefore the basic principles for the forward program development on the basis of the existing processes.

eX Machine studies the effects within the target program behind the scene through the processes generated within eX Analytical Engine.

The term "Analytical Engine" was invented by Charles Babbage approximately 150 years ago referring to the first fundamental concept of the mechanical computer, that he was working on. His idea of replacing a human computer with a mechanical computer came out of his obsession with errors produced by human computers.

This invention of eX Machine was catalyzed by the errors in the human programming for contemporary computers.

eX Analytical Engine learns by accumulating the experience of the target process behavior, what was the correct behavior, what was wrong behavior, what behavior was not analyzed, and what behavior was analyzed mistakenly.

This process can be compared with the cognitive learning process of the human mind - building associations and building subconscious reflexes.

Within the cognitive learning, the steps, that took us to the correct results are achieving a special status in our learning process. They are the last to doubt in case of produced later unexpected results. If the analysis forces us to undo these previously built reflexes or associations, it is usually a somewhat painful process, that is forcing us to re analyze the previous results, that built the reflexes or associations in the first place.

Within eX Analytical Engine this unlearning is represented by "loosing the knowledge" and happens, when a failure is realized in the system result, that was previously understood as correct.

eX Machine learning process is propagated by the target process forward execution and is activated by accumulating the system results, that are accepted as correct (expected). Therefore, the results of the analysis are human factor dependent, but human activity, and therefore human errors, here are limited to analyzing the final results - visible results.

This flexibility is actually necessary in order to allow different analysis results for changed system specifications, and to allow the forward program development on the basis of the existing processes. eX Analytical Engine allows to Undo part of the previous analysis, when previously missed failure is found or the system expectations (specifications) are changed.

One of the original features of eX Analytical Engine is in minimizing the area of uncertainty in the possible fault position in the calculation of program result with the increasing of the target process time that is visible through the accumulating of the program's results (effects).

The degree of analysis precision depends on the position of the first realized failure, or change in specifications, within the coordinate of the mentioned process time, that is measured by the accumulated system results.

In accordance with one aspect of the present invention, there is provided an apparatus for automatic analysis of a target process, wherein the apparatus determines the location of faults contained within the target process or location of modifications within the target process required due to a changed expectation of the result, wherein the apparatus generates a secondary process of accumulating knowledge of the target process functionality through knowledge induction, comprising:

  analyzed calculation base (ACB) attribute for each executable element of the target process;
  means for executing the target process and said secondary process,
  means for said secondary process to build and propagate an elementary knowledge of the target process functionality through knowledge induction that propagates said elementary knowledge through a place and time within the target process,

  wherein said elementary knowledge indicates a knowledge about or an uncertainty about the correctness of an effect of the target process element execution event and,
  wherein said elementary knowledge is recorded within said ACB and,
  wherein the location of fault responsible for a specific failure or location of modification within the target process required due to changed expectation a result is obtained through knowledge deduction that uses said elementary knowledge generated by said knowledge induction to define said location as a constantly minimized area of uncertainty within the result's event definition space, said knowledge deduction following the same rules of knowledge induction of tracing events in the direction opposite to the target process execution.

In accordance with another object of the present invention, there is provided a method for automatic analysis of a target process, comprising:

  determining the location of faults contained within the target process or location of modifications within the target process required due to a changed expectation of the result;
  generating a secondary process of accumulating knowledge of the target process functionality though knowledge induction;
  establishing an analyzed calculation base (ACB) attribute for each executable element of the target process;
  executing the target process and said secondary process;
  executing said secondary process that builds and propagates an elementary knowledge of the target process functionality through knowledge induction that propagates said elementary knowledge through a place and time within the target process, wherein said elementary knowledge indicates a knowledge about or an uncertainty about the correctness of an effect of the target process element execution event;
  recording said elementary knowledge within said ACB; and
  obtaining the location of fault responsible for a specific failure or location of modification within the target process required due to changed expectation of a result through knowledge deduction the uses said elementary knowledge generated by said knowledge induction to define said location as a constantly minimized area of uncertainty within the result's event definition space, said knowledge deduction following the same rules of knowledge induction of tracing events in the direction opposite to the target process execution.

The present invention can thus provide a method for minimizing uncertainty in the position of a fault or of a place for required modification within a target process, where the fault is the cause of a failure (unexpected result) and is not found by a compiler and where a modification is required to comply with new result expectations.

This is accomplished by synthesizing processes, that are analogous to the cognitive understanding of the target process functionality.

First, the model of the target process is built on the basis of its static analysis by the very strict but generic rules in order to create a base for further accumulation of the target process knowledge during its dynamic analysis. In this model every relevant program statement has its own specific position within two dimensional algorithm space.

The strictness of the resulting construction allows for mechanism, that through building consecutive "visions" can automatically and easily evaluate accessibility (presence of a path) between any two elements of the target process. An "accessibility" defines "potential dependency". If statement (b) is accessible from statement (a), only then can the correctness of (a) affect the behavior of (b).

As an example, one important result of automatic evaluation of elements accessibility is ability to identify definitely "non-terminatable" process constructions - data independent endless loops.

At the time of building the model of the target process, present invention provides a method for extracting the control component of the target process algorithm into a form representing the control structure of that process, ("eX Frame of algorithm"). eX Frame of Algorithm is a strict, single definition form that is necessary and sufficient for representing the control structure of any process.

Secondly, the mechanism is introduced that allows for specific dynamic information to be accumulated for every relevant elementary process (program statement). This information is relevant to the understanding of the elementary process functionality and is attached to the built during the prior static analysis of the target process model, feeding that model with dynamic knowledge of target process behavior. We further call this specific information an elementary process "knowledge". The mentioned mechanism allows to build information "cause-effect" relationship and a "relative" and "time dependent" measurement of "correctness" of process elements.

The invention can thus provide a mechanism for defining a process step as "correct" or "uncertain" within defined in this invention coordinates of "process space" and "process time" {"Process Address" and "Local Time"} and defined in this invention measures of process "correctness" and "uncertainty". Mentioned elementary process "knowledge" is continuously accumulated and is being propagated between different process elements. When the target process failure or different from expected result is realized, this knowledge is used in order to identify the position of required modification within the target process.

Means is also disclosed for protecting "correct" elements of the target process from alteration during this target process maintenance by building a knowledge base of the "correct" functionality of the process.

Also disclosed is a mechanism for high level interface between the user and the accumulated knowledge of the target process through eX Machine.

A multimedia presentation may be produced of the target process behavior in order to ease its diagnosis.

Also disclosed is a form of the target process object code - eX Object Code, and the method of its execution. eX Object Code is more suitable for programs analysis, both static and dynamic, and for programs maintenance. It eases and sometimes eliminates traditional recompiling and re-linking of the target process code that normally must be done in order to modify the process.

These features are achieved by extracting from the source code of a target process a specific for that target process static information, necessary for building a model, representing the target process algorithm; building on the basis of that model a dynamic knowledge of the target process behavior; introducing the mechanism for building an understanding of the cause - effect relationships within the target process; introducing the mechanism for building "time dependent " and "relative" "correct - uncertain" attributes of elementary processes within the target process; and introducing the methods for propagating that "correct-uncertain" knowledge between target processes elements during this target process execution and, therefore, automatically increasing the level of intelligence of the target process model.

The invention also offers some other features which will be better understood by reference to the detail description below.

## BRIEF DESCRIPTION OF THE DRAWINGS

FIG. 1 is a flow chart of the sample target process;

FIG. 2 is eX Frame of algorithm of the sample target process presented by the FIG. 1;

FIG. 3 demonstrates how complex logic conditions are reduced into two or more Reduced Logic Conditions;

FIG. 4 represents Reduced Flow Chart of the sample target process presented by the FIG. 1;

FIG. 5 (A) is eX Graph of the sample target process, presented by the FIG. 1, and 5 (B) represents Binary Addresses assigned to the corresponding elements of the eX Graph (5A);

FIG. 6 demonstrates how IF-THEN-ELSE constructions are represented in eX Frame and eX Graph;

FIG. 7 demonstrates the steps of building eX Model, eX Repository and X-Source code;

FIG. 8 demonstrates the main components of eX Machine operation;

FIG. 9 demonstrates the mechanism of defining Exit Access Indicators and defining the accessibility between any two elements of the target process by building of consecutive "visions" on the example of another sample process flow-chart;

FIG. 10 demonstrate the mechanism of defining the "Propagated Vision Point" (PVP) of a process terminal.

FIG. 11 is a diagram showing different sources of faults potentially introduced during the target process implementation;

FIG. 12 is a diagram showing three types of target process failures;

FIG. 13 is a diagram explaining how eX Machine is minimizing the area of the fault position uncertainty during the target process forward execution;

FIG. 14 demonstrates how Event Definition Space is built;

FIG. 15 demonstrates how Correct Algorithm Space is being propagated;

FIG. 16 demonstrates how the "knowledge" of a process element correctness is being accumulated within specific Process Address (PA);

FIG. 17 demonstrates the mechanism of defining the "ancestor" events;

FIG. 18(A) demonstrates the process of execution of eX Object Code; 18(B) demonstrates two components of Object code; 18 (C) demonstrates process of interpreting eX Repository being controlled by the eX Model.

FIG. 19 demonstrates implementation of ACB (Analyzed Calculation Base) construction.

FIG. 20 eX Graph (FIG. 20A) and eX Repository (FIG. 20B) of a sample process presented on FIG. 21A.

FIG. 21 sample process (FIG. 21A) and its X-Source (FIG. 21B).

### *Description of the Preferred Embodiment*

The invention will be presented with its major steps introduced in the following order:

1 Building eX Frame of the target process algorithm;

2 Building eX Graph and Reduced Flow Chart of the target process;

3 Definitions of eX Machine principles of evaluating target process "correctness" and locating "uncertainty" within the target process as a place for modification due to a fault or changed system requirements;

4 Definition of eX Machine principles of the target process Knowledge Propagation (Knowledge Induction);

5 Building eX model of the target process;

Definition of the Analyzed Calculation Base (ACB);

Building eX Repository of the target process;

6 Building X-Source code;

Minimum overhead instrumentation for capturing target process behavior history;

Building user- eX Machine-target process interface by the means of Incremental System Output Process Synchronized (ISOPS) map;

Building System input Process Synchronized (SIPS) map;

7 Example of target process, its eX Model, eX Repository and X-Source code;

8 "Pseudo parallel" synchronized execution of the target process model: "Delayed Sequential" and "Delayed Parallel" eX model execution;

9 Running eX Analytical Engine. Building and propagating of Analyzed Calculation Base of cause-effect relationships within the target process; Knowledge Induction;

10 Activating eX Analytical Engine "knowledge deduction" processes by reference to ISOPS map in order to localize the area of fault positions or place for modifications with constantly decreasing uncertainty;

11 Interpreting eX Graph and eX Repository;

12 eX Object code and its execution;
Execution of eX model as a part of the target process object code;
13 Recompilation and re-linking of eX Object Code;
14 Implementing eX Machine processes at all stages of testing and production;
15 Result Oriented Programming (ROP)
16 Implementing Program Stethoscope;

**1 Building eX Frame of the target process algorithm:**

In the following description we will show how eX Model is built from eX Graph. Constructing of eX Graph of the target process may be preceded, accompanied or followed by building eX Frame of that process algorithm.

Although the step of building the Frame of Algorithm may be entirely bypassed, we will describe this step in order to conveniently demonstrate some important attributes shared between the Frame and eX Graph. In addition, eX Frame of Algorithm can always be used as a very compact and strict (single definition) representation of the target process control structure.

The following description will contain several definitions and axioms. These are necessary, since some of the objects and terms on which eX Machine operates are not previously defined.

The following is the set of objects that eX Frame, eX Graph and eX Model operate on. We will refer to this set as eX Objects Set.

$$\{ \ [,A,X,L,D,E,W,N,=,R,*,C,+,S,/,!,(,),V,i \ \}$$

where

'['   process entry;

'A'   arithmetic or assignment statement;

'X'   function or subroutine call statement, other than graphics library subroutine
      or function         example: CALL, PERFORM;

'L'   IF statement        (one input and two outputs);

'D'   loop statement       example: DO, FOR, WHILE;

'E'   input statement       example: READ;

'W'   output statement or graphics library subroutine or function;

                example:      WRITE(),

                       CALL MOVETO(x,y,xy),

                   where {x,y} – screen coordinates;

'N'   null statement       example: CONTINUE;

'='   STOP statement;

'R'   RETURN statement;

'*'   GO TO statement;

'C'   loop terminal statement or its position, if assumed,

                 example: CONTINUE, ENDDO;

'+'   assigned GO TO statement;

'S' ASSIGN (ALTER) statement;

'/' entry of GO TO, or its position,

example: position of Label or paragraph name,

that are referenced to by some GO TO;

'!' ENDIF or its position if assumed;

'(' opening of LC field;

')' closing of LC field;

'V' ELSE;

'i' - index of the process element within its object class for $eX$ objects other than "(" and ")";

- level of LC field for $eX$ objects "(" and ")";

In the following description we address a computer program process, that is a single module, although our results can be easily extended to a process representing a system of programs.

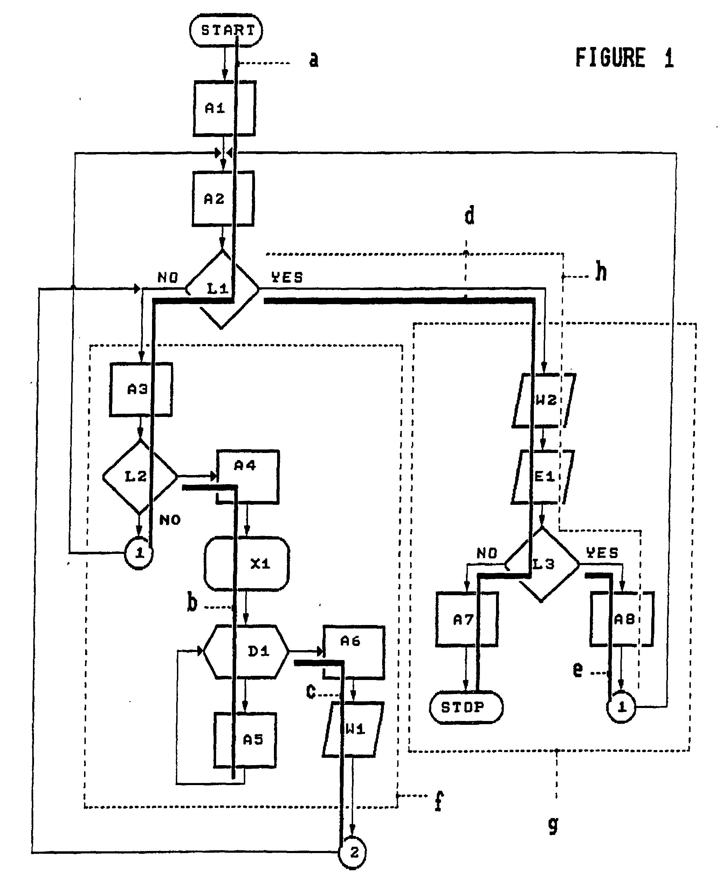

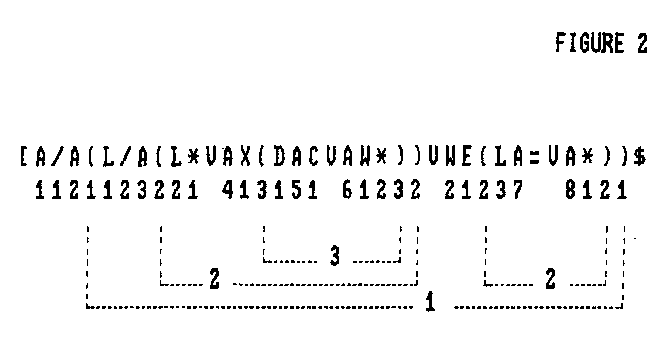

We will understand the module to be either a main program or a single subprogram (i.e. subroutine, function or paragraph) with one entry point. Although, the following example presents a program with one exit, the described implementation will work the same way for multiple exits modules. The implementation of eX Machine for modules with multiple entries can be easily obtained from the described here implementation of eX Machine for the single entry module. FIG. 2 represents eX Frame of the sample target process illustrated by its flow chart in FIG. 1.

**Definition F1: "Reduced Logic condition" (LC)**

-    is a process element with one control input and two control outputs which determine the future direction of the process by its Boolean (0 or 1) solution.

In eX Objects Set the LC is represented by 'L' or 'D' objects; We will call negative solution - 0 solution or Low Potential solution and positive solution - 1 solution or High Potential solution

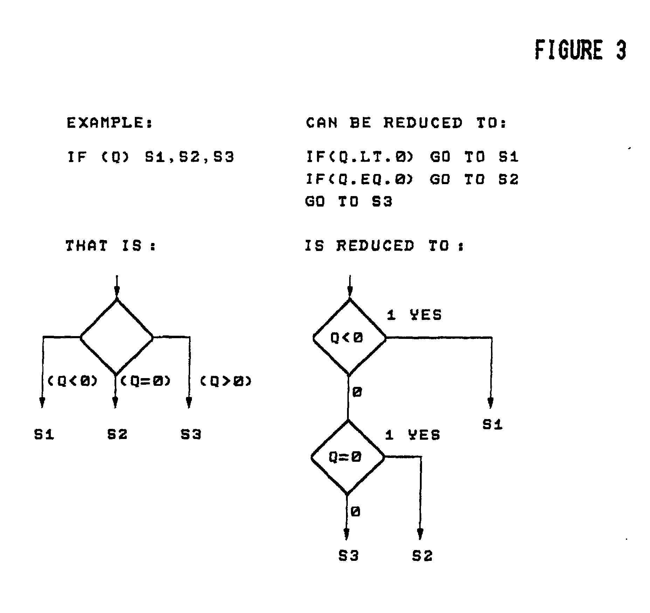

When the target process includes control elements with more than two outputs, such control elements are automatically reduced to two or more LCs during their representation in eX Frame and eX Graph. Refer to FIG. 3. The number of resulting LCs is equal to the number of control outputs minus one, since each LC is increasing the number of control outputs by one.

**Definition F2: "Main Branch"**

-    is a branch representing a pass through the process in the direction of its execution from the origin of the main branch to the "process terminal", when all met logic conditions are passed through their Low Potential solutions.

There are two kinds of origins of the main branches:

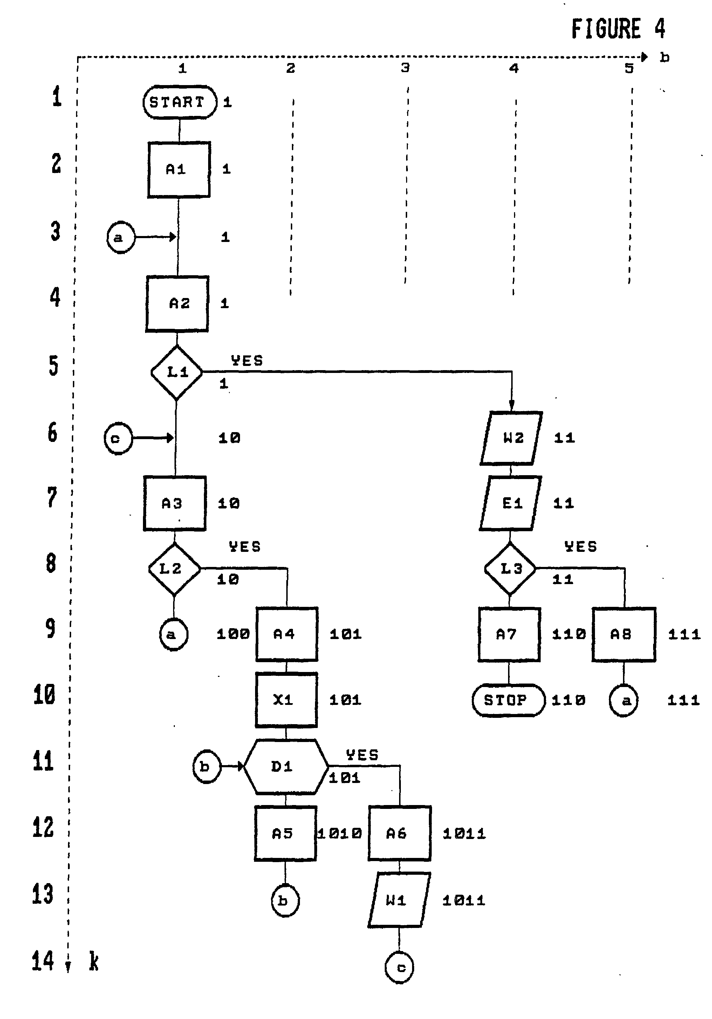

1: process entry (presented as START in FIG. 1 and FIG. 4) that starts the "Entry Main Branch";
2: High Potential solution of LCs.

**Definition F3: "process terminals"**

-    are the following objects of eX Object Set:

|  | Frame representation: |
|---|---|
| - GO TO | '*', '+' |
| - loop terminals | 'C' |
| - RETURN | 'R' |
| - STOP | '=' |

There are two kinds of process terminals:

**Definition F4: "exit terminals"**

- are terminals {'R','='}, resulting in an exit from the process.

**Definition F5: "rewind terminals"**

- are the terminals {'*','+','C'}, that rewind the process to the element that is already defined in the same Main Branch or in the Main Branch that is defined in eX Graph to the left from the current Main Branch.

Therefore the length of a Main Branch depends on the position of its terminal, that in turn depends on the order of Main Branch definitions.

The order of presenting the Main Branches in eX Frame and eX Graph can be described by the principle of "Next Lowest Potential".

**The "Next Lowest Potential" order of parsing the algorithm:**

step 1: Position at START.

step 2: proceed parsing the process through "Low Potential solutions"(0-solutions) of met LCs, until it would take us to the previously passed process element or until an EXIT.

step 3: Back up to the LC last passed through its "Low Potential", if present; position at its "High Potential solution"; proceed from the step 2;

If all LCs have been already passed through their "High Potential " solution, then the parsing of the target process algorithm is completed.

Each execution of the step 1 builds a Main Branch, that is terminated by "exit terminal" or "rewind terminal". Therefore, those GO TO constructions, that are branching forward, are eliminated from eX Frame and eX Graph.

**Axiom:** The process with n reduced LCs contains (n+1) terminals and (n+1) Main Branches, where each Main Branch is sufficiently identified by its terminal.

**Axiom:** The totality of (n+1) Main Branches is necessary and sufficient for representing all the elements of the process.

**Explanation:** in the process with no LCs, i.e. no conditional control, there is only one branch - the Entry Main Branch. Each LC will increment the number of main branches by one by opening new Main Branch through its High Potential solution.

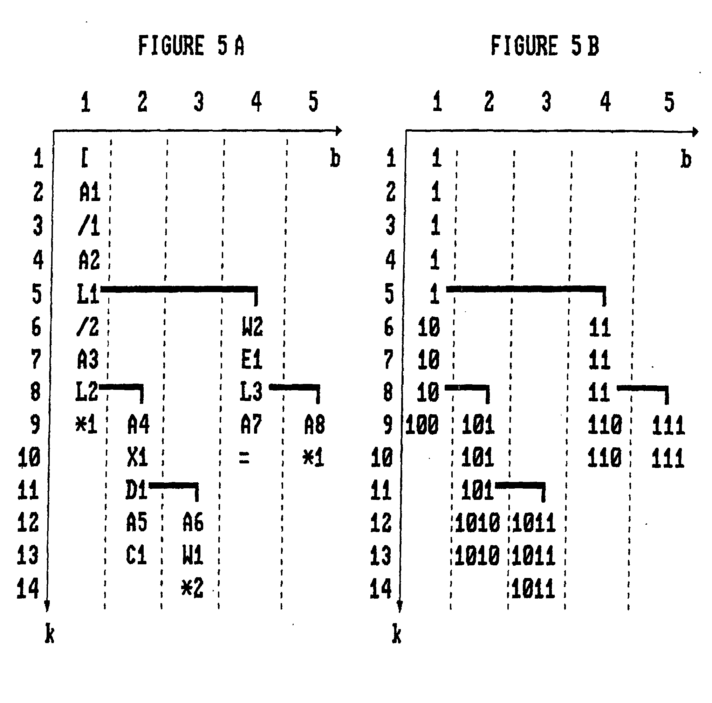

Each Main branch and its terminal are identified in eX Graph by their b-coordinate (FIG. 5(A)). The Frame of the process algorithm is built on the basis of the following Boolean expression: LA V !L B

, that reads: if L do A, else (not L) do B. In eX Frame we introduce parenthesis: '(',')' representing the range of logic levels and terminals, that enable cycles: {'*','+','C'} and exits: {'R','='}. We also omit '!L', since it is obvious that after the ELSE sign 'V', that belongs to the specific L, will follow 'not L'. Thus we get the form: (i L A V B )i, where A and B are correspondingly "0-subfield" and "1-subfield" of LC L; and i represents the "level of LC field"; The definitions are following:

**Definition F6: "t-pass"**

- is a pass from the process entry to the process terminal;

**Axiom:** in any process there are (n + 1) t-passes, where n is the number of LCs in the process. Each t-pass is uniquely identified by its terminal (FIG. 5(A)).

**Definition F7: "branch or LC"**

- is that part oft-pass, going through the LC, that is following that LC.

Each LC has 1 or more 0-branches and 1 or more 1-branches. In FIG. 1 LC L1 has 2 1-branches that are marked by "d" and "h".

**Definition F8: "0-subfield of LC"**

- is a combination of all process elements that are positioned on 0-branches of that LC.

**Definition F9: "1-subfield of LC"**

- is a combination of all process elements that are positioned on 1-branches of that LC.

**Definition F10: "field of LC"**

- is combined of 0-subfield and 1-subfield of that LC.

**Definition F11: "level of LC field" (logic level)**

- is the order of that LC in the t-pass going through it.

Example: in FIG. 1 there are the following logic levels present:

L1 opens logic level 1
L2 and L3 open logic level 2
D1 opens logic level 3

In FIG. 1 Main Branches are marked by the lines "a","b","c","d","e". They are identified by the terminals that can be found in FIG. 5(A) at the b-coordinates: 1,2,3,4,5 correspondingly. The 0-field of LC L1 is shown in FIG. 1 by the dotted line "f", and 1-field of LC L1 is shown by the dotted line "g".
eX Frame is built by representing the Main Branches in a special order along with LCs presented with their corresponding levels. Refer to FIG. 2: eX Frame is built in the form of an algebraic expression, that contains several levels of parenthesis:

(..(..(..)..)..(..)...)
1 2 3 3 2 2 2 1

The rule of an algebraic expression is that the outer (lower level) parenthesis can not be closed before the inner (higher level) parenthesis are closed.

In eX Frame parenthesis are representing logic levels. The same rule applies: that the lower (outer) level logic field can not be closed until the higher (inner) level logic field is closed.

**Definition F12: "field of LC is opened"**

- when we begin to represent that field in the Frame.

**Definition F13: "field of LC is closed"**

- when it is completely represented in the Frame.

**Definition F14: "active field of LC"**

- is the highest still opened field of LC.

**Definition F15: "process segment"**

- is the part of Main Branch, that is positioned between the following process elements: process entry, process terminals and LCs.

Process terminals and LCs terminate process segments. They belong to the segments that they terminate. Being a terminal of a process segment, each LC at the same time owns two other segments: a negative segment of the LC (through its 0-solution) and a positive segment of the LC (through its 1-solution).
Segments possess two attributes:

1: logic level and
2: binary address (described further)

**Definition F16: "logic level of process segment"**

- is equal to the logic level of LC, that the segment belongs to.

**Definition F17: "entry segment"**

- is the process segment that is owned by the process entry.

The logic level of the entry segment is 0. There are (2n + 1) process segments, where n is a number of LCs in the process. That is two segments for each LC and one Entry Segment. For example: in FIG. 1 the target process contains 4 LCs and 9 process segments:
The labeling of process elements for eX Frame and eX Graph of the target process is done in the order of building eX Frame, or eX Graph.

**In the sample target process presented on FIG. 1:**

| Segments | Process elements represented by eX Object Set: |
|----------|-----------------------------------------------|
| 1 | A1 /1 A2 L1 |
| 2 | /2 A3 L2 |
| 3 | *1 |
| 4 | A4 X1 D1 |
| 5 | A5 C1 |
| 6 | A6 W1 *2 |
| 7 | W2 E1 L3 |
| 8 | A7 = |
| 9 | A8 *1 |

FIG. 2 is eX Frame of the process, represented by its Flow Chart in FIG. 1. According to the earlier defined Next Lowest Potential order we start building the Frame of Algorithm from the Entry Main Branch.

When it is terminated by any of the following objects: {*,+,C,R,=}, we back up to the last LC that was passed through its Low Potential solution (NO) and start passing the Main branch that belongs to the High Potential solution (YES) of that LC. This way we will consequently represent all (n+1) Main Branches of the process, where n is the number of LCs within the process.

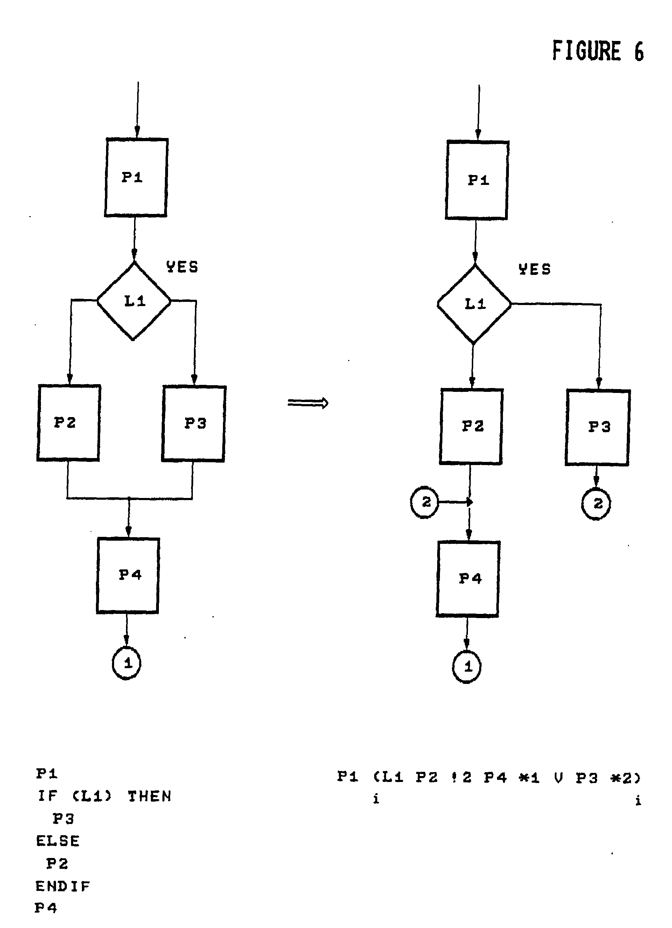

FIG. 6 demonstrates presentation of IF-THEN-ELSE construction in eX Frame and eX Graph. The 1-field of L1 (P3) is being represented only after the 0-field L1 (P2, P4) is closed (i.e. entirely represented).

## Method for extracting an algorithm of the target process into $eX$ Frame of Algorithm that is a single definition generic form built by the "Next Lowest Potential" rule;

step 1: Assign 0 to the active logic level; position on the process entry;

step 2: Pass through the Main Branch; each passed executable element is assigned a name consisting of $eX$ Objects Set member with corresponding index in the increment of 1;

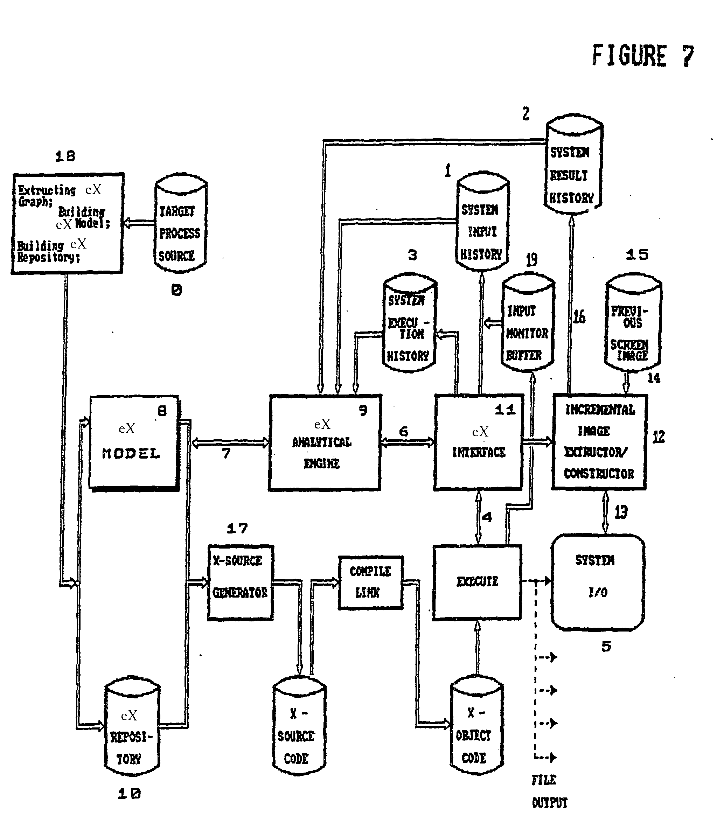

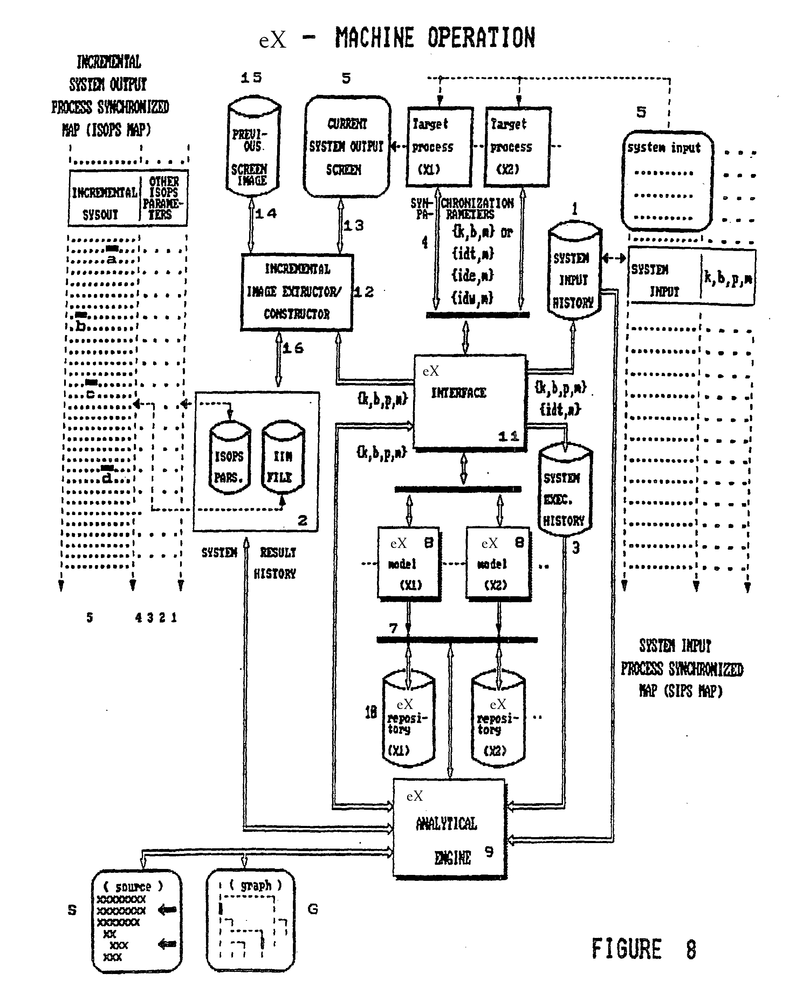

(example: A1,A2,L1,A3,L2,*1 represents Entry Main Branch); The statement is then stored by the assigned name in $eX$ process repository (FIG. 7 and FIG. 8);

When LC is met in the currently passed Main Branch, it is passed through its Low Potential solution (NO);

That LC opens the next logic field, increasing the active logic level by 1;

Every passed LC is represented in the Frame by the opening parenthesis along with an integer representing the level of the opened logic field followed by the sign L or D with the corresponding index: (i Lj or (i Dj;

**step 3:** When a process terminal is met, the segment is terminated.

If the terminal is a Rewind Terminal {(*,+}, then an entry /i is inserted at the position of control return with an index (i) in the increment of 1, unless the entry already exists;

The rewind terminal is assigned an index of entry (i)

**step 4:** Examine active logic level:

IF an active logic level is 0, then

eX Frame constructing is completed;

STOP;

ELSE

the subfield of the active logic level is announced closed;

ENDIF

**step 5:**  Examine closed subfield;

IF the closed subfield was 0-subfield, then

The sign 'V' (ELSE) is placed in the frame;

Parsing is resumed from the High Potential (1-solution)

of the corresponding LC in order to build the Main Branch of that LC;

1-subfield of that level is announced opened;

GO TO step 2:

ELSE (the closed subfield was 1-subfield)

Announce active logic field closed, since both

its 0-subfield and 1-subfield are closed;

Closing the logic field is described in the Frame by closing parenthesis

along with the integer designating the level of the closed logic field: ')i';

The active logic level is decreased by 1;

The logic field just closed (i .... )i is considered to be the terminal for

the segment, terminated by the corresponding LC;

When the field of the LC is closed then the corresponding segment is

announced terminated;

GO TO step 5;

ENDIF

The previous example demonstrates, that in eX Frame construction (FIG. 2) the fields of LCs of the higher logic level lay within the fields of LCs of the lower logic level. In any process there can be a maximum of F logic fields of the level N, where F = 2 in power (N-1)

**2 Building eX Graph and Reduced Flow Chart of the target process;**

The following explains the process of building eX Graph (FIG. 5(A)) and Reduced Flow Chart (FIG. 4) of the target process (FIG. 1).

**Definition G1: "Reduced Flow Chart"** (FIG. 4)

- is a presentation of eX Graph in the form of a Flow Chart.

It is built on the same coordinates k and b and by the same principles as eX Graph. The following process describing the rules for building eX Graph also applies to the building of the Reduced Flow Chart.

It is called a "reduced" flow chart, since all possible changes in the direction of control are reduced to one - to the right, that is the High Potential solution of a LC. The Low Potential solution does not change the direction of control by allowing the control to continue "falling" down. The jumps are allowed only backward (up and left) and are represented by the {terminal - its rewind entry} reference pairs, for example: {*1 /1}, or {*2 /2}, or {C1 D1} in FIG. 5(A).

**Definition G2: Negative state of LC (0 - state)**

- is the state when, if evaluated, LC would result in its 0-solution.

The state of LC is defined by the state of variables that are involved in its evaluation.

**Definition G3: positive state of LC (1-state)**

- is the state when, if evaluated, LC would result in its 1-solution.

**Definition G4: "binary address" (BA)**

- is the combination of 1's and 0's that are the solutions of LCs in the t-pass up to that process element, where the process entry is assigned the binary address of 1.

BAs of process elements that belong to the same segment are the same. BA of 0-segment of LC is calculated from the BA of that LC by multiplying it by 2 ( that is 0 is placed at the right).
BA of 1-segment of LC is calculated from the BA of that LC by multiplying it by 2 and adding 1 (that is 1 is placed at the right).
Example: in FIG. 4, BA of L3 is 11, BA of A7 is 110, and BA of A8 is 111.

eX Graph is built in only two directions. In our implementation it is built vertically down and horizontally to the right.

Main Branches are directed vertically down and represent tracks by which the process execution moves, unless the track is altered by the positive state of one of the LCs, positioned along the way.

Every track is built on its own b-coordinate and tracks will never cross.

LCs have the potential of switching control, by their High Potential Solution, to the other track, which b-coordinate is associated with the positive state of that LC and positioned at the right from the current track. This switching is represented in eX Graph by the horizontal line to the right.

eX Graph is built by the same principle either from eX Frame or by parsing the target process. It is built on two coordinates: K and B, that are growing from (1,1) to (MK,NB), where MK is maximum K and NB is maximum B, that is also the number of Main Branches.

The convenience of starting from eX Frame is that the set of Main Branches is already defined there as those parts of the Frame, that are separated by 'V' sign. The Main Branches are already presented in eX Frame in the right order.

**Method for extracting an algorithm of the target process into the "bi-directed terminated"** $eX$ **Graph by the "Next Lowest Potential rule";**

**Refer to FIG. 5(A):**

**step 1:**  $eX$ **Graph is started at the process entry that is given the (k,b) coordinates of (1,1);**
**The process entry is assigned the binary address 1;**
**The entry Main Branch is started;**

**step 2:** **Passing through the Main Branch each element is represented on** $eX$ **Graph with the increment of k-coordinate and constant b-coordinate;**
**Each element is assigned a BA of the segment it belongs to;**
**Unless** $eX$ **Graph is being built from** $eX$ **Frame, the following (a) and (b) must be done:**

> **(a) the process element is assigned the name consisting of the corresponding member of** $eX$ **Object Set and index in the increment of 1;**

**(b) the statement is recorded in the process repository under the assigned name (FIG. 7);**

**step 3:** **When LC is met passing through the Main Branch, it is passed through its 0-solution;**

**step 4:** **When the constructing of Main Branch is stopped by a process terminal:**
**IF all LCs were already passed through their 1-solution, THEN**
  **Graph is built.**
  **STOP**
**ELSE**
  **Retrace the current t-pass against the direction of process execution until meeting LC passed through its 0-solution;**
  **Start the Main Branch of that LC at Graph coordinates (next_k, next_b),**
    **where next_k = (k of LC) + 1, and**
      **next_b is the next available track (coordinate-b)**
  **GO TO step 2;**
  **ENDIF**

It is important to note, that one of the two eX Graph dimensions, NB, is exactly what is accepted as one of program complexity measures. McCabe's theory "A Complexity Measure" was published in IEEE Transactions On Software Engineering, Vol. SE-2, No 4, December 1976, pp.308-320.

"Cyclomatic Complexity" is defined by McCabe as a maximum number of the linearly independent paths, and for single entry and exit are defined by the frame: $V(G) = e - n + 2$
  where V(G) - Cyclomatic complexity

e - number of edges
n - number of nodes (entry nodes + exit nodes + branch nodes)

We will refer to this frame as McCabe's frame of Cyclomatic Complexity.

An edge is our segment, and number of edges $e = 2q + 1$, where q is the number of LCs, that is our number of the process segments;

A branch node is our LC and number of branch nodes is q, where q is the number of LCs;
Then for single entry and single exit node according to McCabe's frame of Cyclomatic Complexity:

$$e = (2q + 1)$$

$n = 1 + 1 + q = (q + 2)$
$V(G) = (2q + 1) - (q + 2) + 2 = q + 1$

$$V(G) = q + 1 ,$$

where q is the number of LCs.

Thus, defined by McCabe "Cyclomatic complexity" number is equal to the number of our LCs plus 1 and equal to our NB, where NB is the number of Main Branches.

The previous frame corresponds to-the result of the work, described in the Patent Number 4853851, Issued in 1989: " The Cyclomatic number equaling the number of linearly independent paths is the number of paths counted at the widest part of the program flow graph. This approach on the computation of the Cyclomatic number has not yet been described by McCabe".

The second dimension of eX Algorithm Space (MK) could be used as well to describe an algorithm complexity. MK represents the longest way from the process entry to a terminal and, therefore, the number of elementary processes in the longest t-path. The space of the rectangular with dimensions [MK,NB] appears to be a good indication of the target process algorithm complexity. We call this space an **"Algorithm Space"** of the target process.

For example, the Algorithm Space of the example from the FIG. 1 is [14 x 5].

**FIG. 5(A) demonstrates following useful characteristics of eX Graph.**

**1.** Every element can be uniquely addressed by two coordinates (k,b);

**2.** The graph is built in only two directions - in our implementation down and to the right - where falling down can be interrupted only by shifting to the right by the High Potential solution of a LC.

**3.** Process terminals, that are not "exit" terminals (STOP or RETURN) can "rewind" the process. This rewinding is allowed only backward, i.e. up-left. This is so, since the jumps forward were eliminated during the constructing of eX Frame and eX Graph by the definition of the Main Branch.

4. Every segment is assigned the Binary Address that uniquely identifies the logic position of that segment within the target process.

**5.** eX Graph allows for easy determination of "Accessibility" between process elements.

**Definition G5: "Element s2 is accessible from element s1"**

**-** when there is a path from s1 to s2.

I.e. s2 is accessible from s1 if it is possible that on some input data combination s2 may be executed some time after the execution of s1.

The existence of "accessibility" between two process elements is a necessary condition for one element correctness to effect the result of another process element, that is that "accessibility" is the necessary condition for the "cause - effect" relationship between two process elements.

Recently several definitions of Program Dependencies are proposed in order to study effects within the programs. Two basic types of program dependencies are: "control dependencies" and "data flow dependencies". Program dependencies are used for such critical purposes as software testing, debugging and maintenance. Until recently, most proposed uses of program dependencies have been justified only informally, if at all in view of the difficulties of the implementation of such use.

In the work of A. Podgurski and L.A. Clarke, "A Formal Model of Program Dependencies and Its Implications for Software Testing, Debugging, and Maintenance," IEEE Transactions of Software Engineering, 16,9, September 1990, pp.965-979 the authors present the term "semantic dependence" as a certain concept that is a necessary condition for one statement to potentially effect execution behavior (and therefore the result) of another statement. However, this work proves that different generalizations of control and data flow dependencies are not sufficient information to automatically identify program faults, since they are not sufficient even to identify the existence of "semantic dependence" which, in turn, would not be sufficient, any way, to identify program faults.

Presented in this invention method for automatic determination of elements accessibility could be defined in respect to the "semantic" dependence as a practical method for evaluating the necessary condition for the existence of the "semantic" dependence between any two elements of the target process.

In other words, the presented method practically evaluates the potential for:

**1.** statement s1 to be responsible for the mislbehavior of s2;

**2.** statement s2 to be effected by the modification of s1;

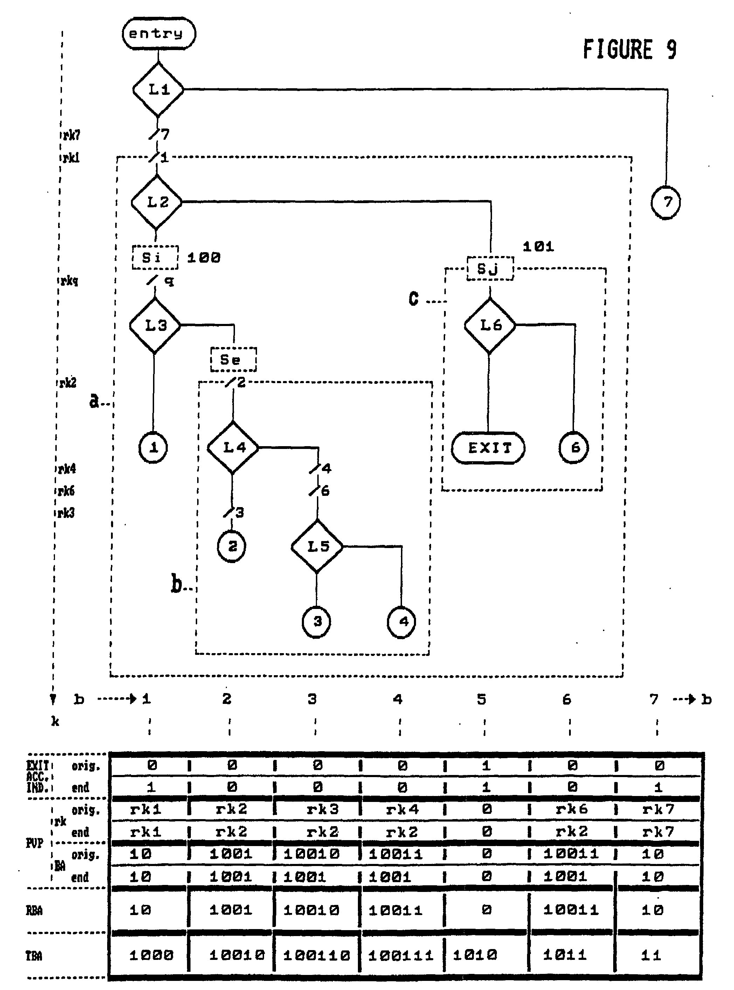

Being able to determine the accessibility between process elements also solves the question of presence of "definite non-terminability" Data Independent Endless Loops. We will show on the example of FIG. 9 how using eX Graph Binary Address arithmetic we can easily define the existence of:

- accessibility between Si and Sj;
- parts of process, that create Data Independent Endless Loops;

It is commonly accepted that the question of whether or not the program will terminate is proven to be unsolvable. We can divide this question of process "terminability", i.e. ability to terminate, into two categories:

- data independent endless loops
- data dependent endless loops

Data independent endless loop consists of process elements that do not have an access to "exit" terminals.

Data dependent endless loop is a such construction that after entering it the control will never reach an exit (STOP or RETURN) by the reason other than the absence of control passes to these exit terminals. The reason in this case is either:

a: the absence of the manipulation of program variables, that could potentially change the control pass, on the specific control passes

or

b: change of these program variables in the direction that takes the values of LCs further from changing their states between Low Potential State and High Potential State.

In both cases a: and b: the control will fall into an endless loop, going through the same terminals in the same sequence, without ever being able to reach an "exit" terminal.

**Definition G6: *bn**

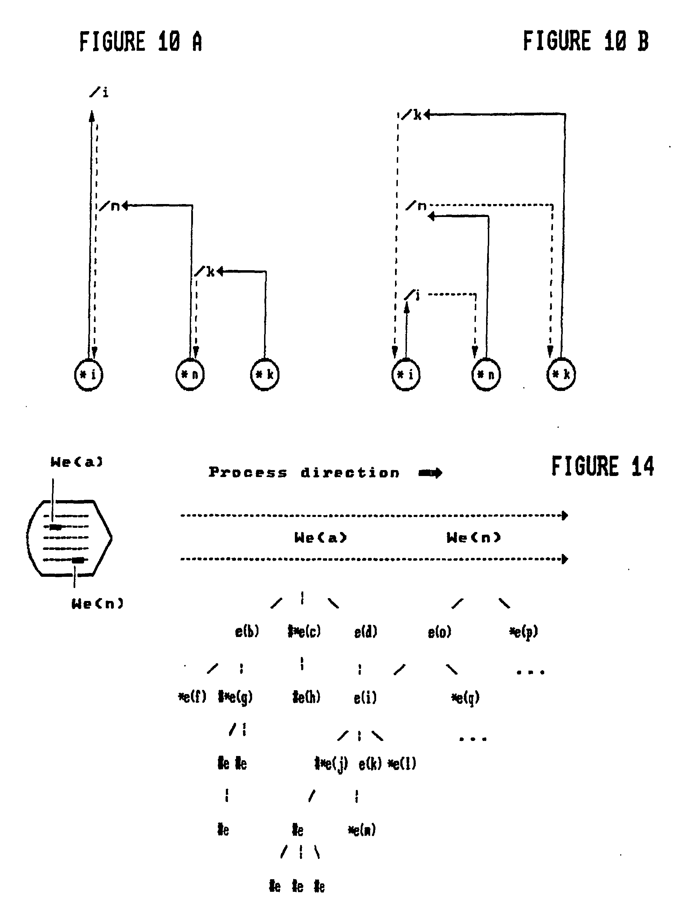

- will refer to the terminal with b-coordinate equal n.
  (example: in FIG. 10 *b3 refers to the GO TO terminal on the b=3 and *b5 refers to "exit" terminal on b=5)

**Definition G7: MBn**

- will refer to a Main Branch built on the b-coordinate equal n.
  (example: MB3 in FIG. 9 refers to the Main Branch built on coordinate b=3.

**Example of Data Dependent Endless Loop:** If there are no elements on the pass between /1 and *1 that can redefine the values, being examined by L2 and L3, then terminal *b1 will produce Data Dependent Endless Loop as soon as L2 and L3 will be resolved by their Low Potential solutions the first time (since the state of L2 and L3 will never change during the forward execution of the target process.)

**Example of Data Independent Endless Loop:** Data Independent Endless Loop construction is presented in FIG. 9 by Main Branches MB2,MB3,MB4. If L3 is ever solved positively, the process will go in the infinite loop, no matter, what data manipulation statements are coded within those branches.

While Data Dependent Endless Loops constructions present a potential for process "non-terminability", they are not necessarily faulty constructions, since it could be so, that an input data can never be such, that would set LCs in the state of infinite loop.

An entry /q in FIG. 9 does not correspond to any terminal and is shown only, as an example of the fact, that the position of L3 in the negative subfield of L2 with rewind terminal *b1 rewinding the process control directly in front of L2 is not necessarily a fault, even if L2 and L3 are not data dependent on the path /1 to *1. This is, because, if L3 had received control through the entry /q, returning the control to the entry /1 will not necessarily result in L2 being solved negatively thus in creating an endless loop.

Data Independent Endless Loops are from the other side definite faults in the process constructing.

The detection of Data Independent Endless Loops is done by evaluating an accessibility between "rewind" terminals and "exit" terminals. The same process would allow evaluation of accessibility between any two elements of eX Graph (for example between Si and Sj in FIG. 9).

eX Graph allows explanation of the accessibility between its elements as being determined by the following three potentials:

- "Free Fall Potential" within a Main Branch;
- "Shift Potential" of LCs;
- "Rewind Potential" of a terminal;

**"Free Fall"** potential is determined by the nature of the sequential procedures, when one process element becomes active after another.

### Definition G8: "Shift potential of LC"

- is the potential of LC to increment b-coordinate as a result of a positive solution of the LC.

Example: in FIG. 5(A) LCs: L2, D1 and L3 have a shift potential of 1, and L1 has a shift potential of 3.

### Definition G9: "Rewind Potential of terminal"

- is the potential of a terminal to decrement BA.

The value of BA is determined as follows:
if bbb is a bit sequence, then

bbb0 > bbb
bbb1 > bbb0
bbb1 > bbb00

I.e. in order to compare, BAs are left justified, corresponding bit positions are compared left to right until first mismatch, where 1 > 0 > _, and where _ is an empty position, and a bit position at the left has a higher significance.

Example in FIG. 5:

BA(L2) > BA(L1), since 10 > 1
BA(W2) > BA(A3), since 11 > 10
BA(W2) > BA(A5), since 11 > 1010

### Definition G10: "segment address" (SA)

- is a couple {BA,k}, where BA is a Binary Address of the segment and k is a k-coordinate within the segment.

Segment Addresses can be compared. In comparing SAs {BA,k}, BA has a higher significance, i.e. (11,7) > (10,7), and (11,7) > (11,6).

Example FIG. 9: segment address of /3 is {10010,rk3}

### Definition G11: "element's vision"

- element s2 is positioned within the vision of element s1 or s2 is seen from s1 and s1 sees s2, if SA(s2) is a descendent of SA(s1);

**Definition G12: SA(s2) is a descendent of SA(s1),**

if BA of s2 is built from BA of s1 by concatenating binary digits at the right, or if BA(s1) is equal to BA(s2) and k (s2) is greater than k(s1);
s2 is within the vision of s1 if there is a path from s1 to s2 that is a part of a t-pass. Remember, that t-pass does not pass terminals.

Example: In FIG. 4, A6 is within vision of A3, since 10 is found left justified within 1011; (A6 is seen from A3 and A3 sees A6).
Example: 101 can be mapped on 1011 left justified, therefore any element within segment 1011: {A6,W1,*b3} lay within the vision of any element of segment 101: {A4,X1,D1}
Example: X1 lays within the vision of A4, since their BAs are both 101 and k of X1 is greater than k of A4.

**Definition G13: "Vision of the rewind terminal**

- is the vision of its Rewind Entry; the vision of "exit" terminal is empty.

**Definition G14: "s2 is accessible from s1"**

- if s2 lays within the "access field" of s1.

**Definition G15: "Access Field" of process element**

- is combined of all the visions it successively owns. The term successively means, that the visions are propagated by the terminal visions.

Thus, an access field of the process element is combined of the vision of the element + visions of terminal it sees + visions of terminals, that are seen from those terminals and so on ...)
The more precise definition of "Access Field" follows and will be presented through the definition of **"Propagated Vision Point" (PVP)** of a process terminal presented in the definition G22.
FIG. 9 presents 5 attributes built for each terminal of eX Graph. A terminal attributes are:

- terminal's Binary address (TBA);
- terminal's Rewind Binary Address (RBA);
- terminal's rk;
- Propagated Vision Point (PVP);
- Exit Access Indicator (EAI);

**Definition G16: Rewind Binary Address (RBA)**

- is binary address of the rewind terminal entry; (RBA of exit terminal is equal to 0)

rk is the k-coordinate of a rewind terminal entry; (rk of exit terminal is equal to 0)

**Definition G17: "Exit Access Indicator (EAI)"**

- is an indicator that is set to 0 for "closed" terminals and set to 1 for "open" terminals.

**Definition G18: "open terminal"**

- is an exit terminal or rewind terminal that has access to one of the exit terminals.

**Definition G19: "closed terminal"**

- is a rewind terminal that has no access to any of the exit terminals.

**Definition G20: "closed region"**

- is a combination of adjacent Main Branches that are defined by closed terminals.

Once the control of the process gets inside of a closed region, it would not be able to get out, i.e. the process will not terminate.
Example: in FIG. 9 {*b2,*b3,*b4} define a closed region.

**Definition G21: the position of "Propagated Vision Point" (PVP) of a process terminal:**

- is described by FIG. 10.

FIG. 10 diagrams the principle of terminal's vision propagation and setting the Propagated Vision Point of two or more process terminals. On this figure an established vision is represented by a dotted line and the pass from the terminal to its rewind entry is represented by a solid line.
Refer to FIG. 10(A): By our definition the vision of the terminal is the vision of its rewind entry. If rewind entry /n of process terminal *n can see another terminal *i, who's rewind entry /i can see the rewind entry /n, then we say, that the vision of *n is propagated by the vision of *i and the vision of *i becomes the Propagated Vision Point of both terminals *i and *n;
The Propagated Vision Point of a terminal is represented by the segment address of a specific rewind entry.
If terminal vision is not propagated by the visions of other terminals, then the Propagated Vision Point of that terminal is its own vision, that is the vision of its entry.
The same mechanism of terminal visions propagation is valid between the Propagated vision of several terminals and vision of another terminal;
On the FIG. 10(A) the rewind entry of the terminal *k, that is /k can see terminal *n, which has a PVP /i. Therefore the PVP of *k is propagated to /i.
Example: In FIG. 9, PVP of *b1 is /1;

PVP of *b2, *b3, *b4, is /2;
PVP of *b5 is 0 ,i.e. empty;
PVP of *b6 is /2;
PVP of *b7 is /7;

**Definition G22: "The Access field" of process element**

-  is a combination of its own vision + Propagated Visions of all the terminals that are positioned within this element's vision.

Refer to FIG. 9: Example: the access field of element Si is the vision of entry /1, since it is combined of visions of Si and, PVP of *b1, PVP of *b2, PVP of *b3 and PVP of *b4, that are within the vision of Si;

PVP of *b1 happens to own the vision of Si and the vision of /2, that is PVP of (*b2, *b3,*b4).

Example: the access field of any element Se, that belongs to MB2 and has k - coordinate <= rk2, is the vision of that element, since it owns the vision of /2, that is PVP of *b2, *b3, *b4, that are within the vision of Se.

Example: the access field of element L5 is the vision of /2 since it is the Propagated Vision point of *b3 and *b4, that are within the vision of L5; the vision of L5 is owned by the vision of /2 and is not counted;

When all the terminals within the vision of a rewind entry claim that entry as their PVP, the result is the closed region - (Data Independent Endless Loop).

Example: *b2, *b3 and *b4 claim /2 as their PVP which, in turn, has no other terminals in its vision. This defines Closed Region ,i.e. Data Independent Endless Loop.

In order to find "closed" terminals and "closed regions", i.e. the constructions, that are representing Data Independent Endless Loops, we build Exit Access Indicator (EAI) for each terminal of eX Graph.

**Building the Exit Access Indicator (EAI)**

Refer to FIG. 9: TBA, RBA and rk of each terminal are known after the constructing of eX Graph is finished.

Origvtally the value of PVP is built from terminal's rewind entry, that is rk and RBA of the terminal.

EAI of all rewind terminals are originally filled with 0 (i.e. set closed), and EAI of all exit terminals are filled with 1 (i.e. set open).

Passing from b = 1 to b = NB, examine SA of terminal's PVP against BAs and PVPs of all other terminals in attempt to propagate (decrement) PVP of currently examined terminal and possibly open that terminal, if it is still closed.

We will call PVP of terminal *bi as PVP*bi and we will call EAI of *bi as EAI*bi.

Refer to the example of FIG. 9:

**1. Originally PVPs of terminals are set to SAs of their rewind entries:**

BA of PVP*b1 is set to 10;
BA of PVP*b2 is set to 1001;
BA of PVP*b3 is set to 10010;
BA of PVP*b4 is set to 10011;
BA of PVP*b5 is set to 0, since *b5 is an "exit" terminal;
BA of PVP*b6 is set to 10011;
BA of PVP*b7 is set to 10;

**II. Propagating PVPs and setting EAIs**

(A) Passing the terminals in the order from *b1 to *bn, where n is NB, that is the number of Main Branches, examine each terminal in regards to all the other terminals of eX Graph in the attempt to:

a: propagate the terminal PVP by the earlier described rule (G21).
b: open the terminal by setting its EAI to 1 by the following rule.

**Definition G23: If PVP of closed terminal can see any open terminal, then examined terminal is announced to be open by setting its EAI to 1.**

PVP*b1 {10,rk1} sees *b2,*b3,*b4,*b5, but neither of those terminals PVPs can see PVP*b1;

PVP*b1 is not changed.
PVP*b1 {10,rk1} sees open *b5 (1010);
open *b1: set EAI*b1 to 1;

PVP*b2 {1001,rk2} sees *b3,*b4, that are 100110 and 100111, but neither of those terminals PVPs, that are 10010 and 10011, can see the PVP*b2;

PVP of *b2 is not changed;
PVP*b2 {1001,rk2} does not see any open terminals, that are at the moment *b1 and *b5, i.e. 1000 and 1010);
EAI*b2 is kept 0;

PVP*b3 {10010,rk3} sees *b2 (10010) and PVP*b2 {1001,rk2} sees PVP*b3, that is {10010, rk3};

set PVP*b3 to PVP*b2: {1001,rk2};
propagated PVP*b3 still does not see any opened terminals;
EAI*b3 is kept 0;

PVP*b4 {10011,rk4} sees *b3 (100110), and PVP*b3 {1001,rk2} can see PVP*b4 {10011,rk4};

set PVP*b4 to {1001,rk2};
propagated PVP*b4 still does not see any open terminals;
EAI*b4 is kept 0;

PVP*b5 is not changed, since it is an exit terminal;
PVP*b6 {10011,rk6} sees *b3 and *b4, whose current PVPs {1001,rk2} can see PVP*b6;

set PVP*b6 to {1001,rk2};
propagated PVP*b6 still does not see any opened terminals;
EAI*b6 is kept 0;

PVP*b7 {10,rk7} can see terminals from *b1 to *b6, but neither of them can see PVP*b7;

PVP*b7 is not changed;
PVP*b7 {10,rk7} can-see open terminals (1000 and 1010);
open *b7: set EAI*b7 to 1;

In some processes (refer to FIG. 10(B) terminal *i, that is propagated by the vision of *n, is examined before the PVP of *n is finally set, since the PVP of *n may in turn be upgraded by the vision of the other terminal, and so on.
Therefore, the only way to make sure, that all the possible upgrades of PVP and EAI were performed, is to repeat the step (A) of examining all the terminals in the order from *b1 to *bn once again. If no upgrades were done within the last pass, the process of upgrade of PVPs and EAIs is finished.
In the worst case the number of required passes through the terminals i.e. executions of the step (A), is equal to the number of Main Branches, NB, since each pass will finally set the PVP and the EAI of at least one terminal. (In our example all upgrades were performed in one pass, and the second pass through *b1 to *b7 will not change any PVP and EAI).
As a result we see: EAIs of terminals *b2, *b3, *b4 and *b6 are 0, these terminals are closed.
Terminals *b2,*b3,*b4 constitute a closed region (data independent endless loop). Terminal *b6 is also closed and its rewind entry is within the mentioned closed region [*b2 - *b4].
Dotted line (a) represents the vision field of an entry /1 {10,rk1}. This entry is PVP of *b1. This means, that any element of Main Branch b=1 can access any element within the vision of {10,rk1}.
An access field of (Si) is represented by the dotted line (a).
Dotted line (b) represents the vision field of an entry /2 {1001,rk2}. This entry is PVP of *b2, *b3, *b4 and *b6. This means, that any element of Main Branch MB2, MB3, MB4 and MB6 can access any element within the vision of {1001,rk2}.
By our definition, an access field of a process element is the combination of all the visions it successively owns.
Therefore an access field of Sj is combined by the fields represented by dotted line (c) and dotted line (b), as dotted line (c) is the vision of Sj and dotted line (b) is the vision of *b6 that is seen from Sj.
In FIG. 9 we can see, that (Si) can access (Sj), and (Sj) cannot access (Si).

There are two steps in establishing accessibility from process element s1 to process element s2:

1: if SA(s2) is a descendent of SA(s1)

(established by comparing Binary Addresses and if BAs are equal, then by comparing k-coordinates), then s2 is accessible from s1;

2: if the step 1 fails, then

if SA(s2) is a descendent of the PVP of any terminal, that is seen from s1,
then
s2 is accessible from s1;

Example from FIG. 9: Examining attributes ( BA, RBA, PVP ), that are built for every terminal, we can determine the following:

a: Si can not see Sj, as 101 is not seen from 100; However Si can access Sj, since one of the terminals, seen from Si, *b1, can see Sj through its PVP {10,rk1}, as 101 is a descendent of 10;
b: Sj can not see Si, as 100 is not a descendent of 101; the terminals that are seen from Sj are ones with BAs 1010 and 1011; Terminal 1010 has no RBA or PVP, being an exit terminal; terminal 1011 has PVP {1001,rk1}, which can not see 100 either. Therefore Sj can not access Si.

## 3 Definitions of eX Machine principles of evaluating target process "correctness" and locating "uncertainty" within the target process as a place for modification due to a fault or changed system requirements;

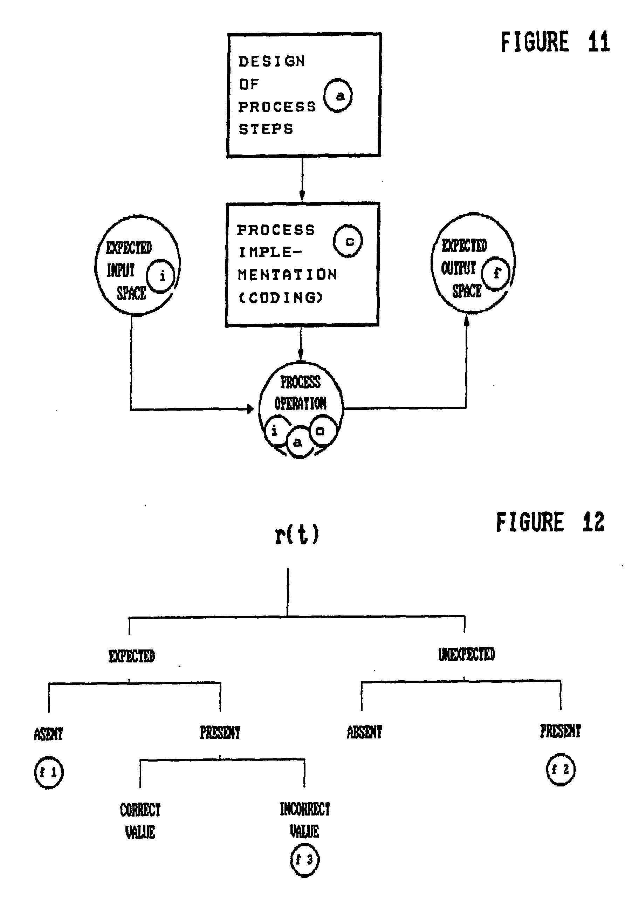

FIG. 11 presents the principles that apply to any computer software process. Here we see the three classes of process errors (faults) from the point of their origin. Those three classes include all possible process faults.
The first class (a) are faults introduced during the process design. Their origin is in misunderstanding the process specifications, or in the faults introduced during the design of steps that must produce an expected output from an expected input. Those are faults in the process algorithm.
The second class (c) are those faults introduced during the design implementation. These are the faults that are introduced during coding of the designed algorithm into understandable by the compiler programming language. Those are "logic" coding faults. Note, that the syntax faults, that are eventually located by the compiler are not counted here, as eX Machine addresses "logic" faults, that are present in the code after it had been checked by the compiler.
During the target processes execution, during its testing or production, there could be an input combinations that are invalid, but have not been expected, and therefore, have not been accounted and intercepted by the process algorithm. We can say, that faults of this class are in the input, i.e. outside of the target process. These are input faults (i).
The purpose of FIG. 11 is to show, that all those faults are present in the implemented (coded) target process, and on some conditions they will be manifested in failures (f) in the expected output of the process.
The following definitions are necessary at this point:

**Definition P1: Let (s) designate an elementary process (program statement).**

**Definition P2: "Process Address (PA)" {k,b} of the element**

- is the position of this element within the "Reduced Flow Chart" or, which is the same, within eX Graph of that process.

(refer to FIG. 5(A) and FIG. 4) PA is defined by the two coordinates k and b. Each statement (s) within the process has its own PA that is measured by {k,b}.

**Definition P3: "Local Time" {p}**

- is the integer value of current occurrence (presence) of statement (s) within the process execution; (i.e. p = 1,2,..n)

eX Machine does not work with a physical time. In this invention the definition of time is taking into consideration that (s) functionality is effecting the process only when and if the control passes through that (s), causing it to become temporarily active. Therefore we give each event of (s) execution its own time parameter.

A Local Time is counted from the invocation of the process.

**Definition P4: "process event" {k,b,p}**

- is an event of (s) execution.

It is presented in eX Machine by three parameters {k,b,p}, where {k,b} identify place ("Process Address") and {p} identifies time "Local time".

**Definition P5: "Process time"**

- is represented by process events {k,b,p}.

This makes the analysis independent from hardware and operating system dependent physical time necessary for the execution of specific process element.

We say that each elementary process (s) lives within its own coordinate of time (p). A time from the point of view of the entire process can be measured only by the combination of "place" and "time" i.e. "Process Address" {k, b} and "Local Time" {p}.

For example, if we would want to reference to the process time at the moment when the statement A5 in FIG. 5(A) and FIG. 4 was executed the third time, we would refer to that moment as {12,2,3} event.

The output events of the process are the reasons why the process is built, in the first place, and usually only if those output events are incorrect, we declare that the process has failures.

A computer process may have several outputs, for example, one output to the system terminal, others - to different files. eX Analytical Engine is activated automatically using the Incremental System Output Process Synchronized (ISOPS) map, as it will be explained further.

The process time is presented at the specific output only by the sequence of output events directed to it:

**..** ·{ki,bi,pi} {kj,bj,pj} {kl,bl,pl}..

Looking at the process from the output, we see those process events represented by the output results .. ri rj rl .., where process time of rj is after ri and before rl.

FIG. 12 presents the only three possible types of failures in producing an output event (r) at the process time (t).

**Axiom 1: For any output there are three and only three types of process failures:**

(f1) Expected at the specific process time output event not produced;
(f2) Unexpected at the specific process time output event is produced;
(f3) Expected at the specific process time output event was produced with wrong value.

eX Machine interface includes commands that address these three types of process failures, and therefore eX Machine can address any process failure.

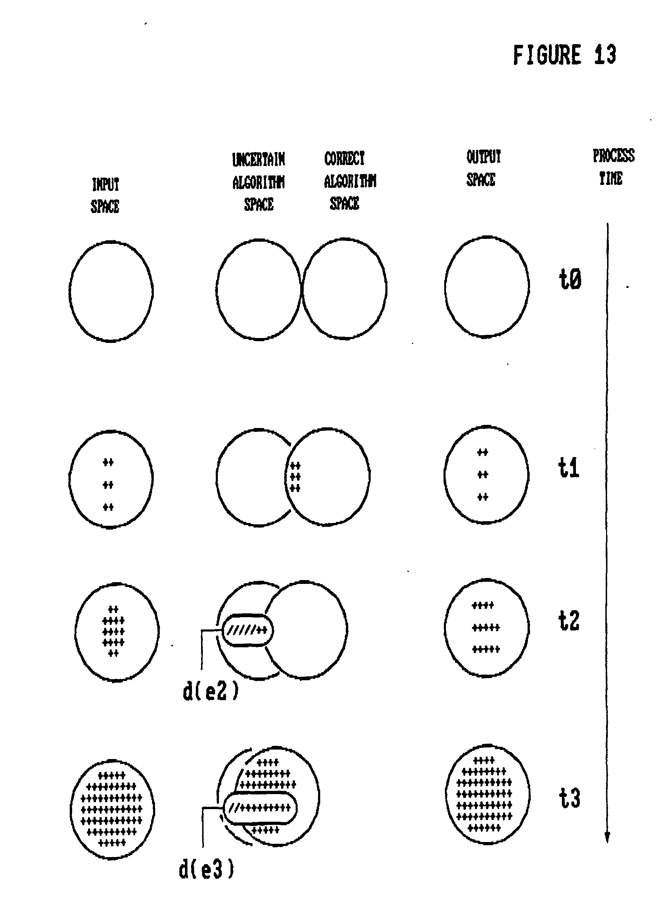

FIG. 13 diagrams on the abstract level the principle of how eX Machine accumulates the knowledge of the process over time. These accumulation of knowledge will be described in detail with references to FIG. 7, FIG. 8, FIG. 14, FIG. 15, FIG. 16, FIG. 17.

In order to address FIG. 13, the following definitions are necessary:

**Definition P6: "Correct Process Address" (CPA)**

Process address PA is defined "correct" if it contains a process element (s) that had been executed as a "correct" event, i.e. producing a correct result in a correct place and time)

**Definition P7: "Uncertain Process Address" (UPA)**

Process address PA is **"uncertain"** when it contains a process element (s) that had not yet been executed in a "correct" event.

When we define process address as "correct", we define its contents to be correct within specific event. For example, a statement A = B + C may be correct only at the specific place and time of the process.

It must be understood here, that the distribution of Local Time between Process Addresses is done dynamically during the process execution and is absolutely determined by two factors:

(1) hard coded process control structure and elements contents;
(2) changing input values combinations;

So, in the condition of unchanged process structure and the contents of the process elements, it is the input values that define distribution of local time in the process. Note, that we do not obligate the "correct" process element to be correct all the time.

This is where the "relativity of correctness" comes in to play. In other words, (s) can be correct only relative to:

- the place and time (process time),
- expected input and
- expected output.

This relativity is exactly the reason for the absence of methods capable of proving program correctness. In our view, the only answer to the problem of automating of the process of locating the fault position is in constant minimizing of this position uncertainty.

**Definition P8: "event correctness"**

We will define an output event to be "correct" if it is producing "correct", i.e. expected result. This expectation is in process time and value.

We will define a process event {k,b,p}, other than output event, to be "correct" if it takes a part in the chain of events contributing to producing of the "correct" output event.

I.e., events, other than output events, are claimed to be "correct" by "correct" output events.

Events may be claimed as correct by more than one output event For example, let e1 e2 e3 e4 e5 e6 e7 represent some sequence of the process events, where e7 is correct output event, e1 and e3 are input events and e1, e2, e3, e4 and e6 where involved in producing the value of e7. Then we say that events e1 through e7 except e5 are correct.

Event e5 may be defined as correct by some other correct output event in which calculation chain e5 would take a place, but until then its correctness is uncertain.

This definition of process element "correctness" can be simply understood by the following association: Let say, a computer board is associated with a coded process and each Integrated Circuit (IC) on that board is associated with a coded elementary process, like program statement. If the IC is not defected and placed in the correct slot then, assuming that the IC took a part in producing a correct result on the previously tested input signals combination, this IC will take part in producing the same correct result on the same input combination in the future. This IC is, therefore, defined as "correct" because of its POTENTIAL to produce "correct" result being positioned at the "correct" place on the computer board and on the "correct" input combination, i.e. within the "correct" "place" and "time".

**Axiom-2: The "Correctness" of process functionality is independent of its "optimal" implementation.**

**Axiom-3: The optimization of the process, that was defined as correct, will not break its correctness as defined by eX Machine.**

A simple proof is in the fact that an equivalent optimization is not supposed to alter the process resulting functionality.

**Definition P9: "algorithm space"**

- is space combined of Process Addresses {ki,bi}

Refer to FIG. 5 and FIG. 4. It is important to notice that in the conditions of unchanged process constructions, the algorithm space is constant and is limited by the two dimensions of eX Graph of the target process - MK and NB.
In FIG. 5(A) and FIG. 4, representing Graph and Reduced Flow Chart of our sample process the dimensions (MK,NB) are (14,5).

**Definition P10: "correct algorithm space"**

- is space combined of PAs, that are presently defined as CPAs.

**Definition P11: "uncertain algorithm space"**

- is space combined of PAs, that are presently defined as UPAs.

We use the term "presently defined" because eX Machine has a capability of both, announcing and denouncing the correctness of events and PAs. This partial "loosing of knowledge" previously built is unavoidable when the failure is recognized in the process output that was previously accepted as correct.

**Definition P12: "event definition space"**

of an event (e) consists of PAs of the (e) "ancestors" events.

**Definition P13: "ancestor event", "descendent event"**

Event e1 is an "ancestor" of event e2, which is the "descendent" of e1, if e1 took part in producing e2 by either:

- taking part in producing the value of e2 (value ancestor event);
      or
- taking part in producing a parameter for a conditional control event on the way to e2 (control ancestor event);

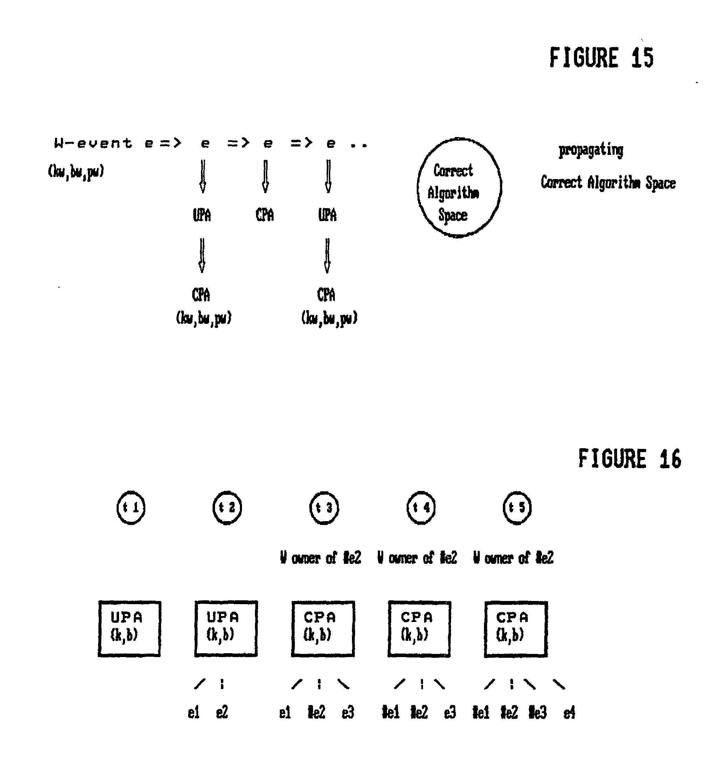

Refer to FIG. 14: e(a) is a descendent of the events, that are shown on this example below e(a) and within its branches;

e(d) is a descendent of e(i), e(j), e(k), e(l), e(m) and the events that are the ancestors of e(j);
e(b) is an immediate descendent of e(f) and e(g);
e(f) and e(g) are immediate ancestors of e(b);

Refer to FIG. 13: The purpose of this diagram is merely to show abstractly how process uncertainty can be minimized over time and how the position of faults can be localized over time. This diagram helps in overall understanding of eX Machine. More detailed explanations of eX Machine will follow.
There are four objects represented on this diagram. From left to right they are:

**input space -** all possible combinations of input parameters; that is, if the process is using four input parameters, then an input space for that process is a four dimensional space;
**uncertain algorithm space;**
**correct algorithm space;**
**expected output space -** combination of expected output results at the output being examined;

t0, t1, t2, t3 are representing different process time, where t0 is at the beginning of the process, when no output results are yet created and at t1, t2, and t3 the process output is continuously accumulated.

Let us say, that the first failure is recognized at the process time t3. This diagram is showing that, when eX Machine method of uncertainty minimization is applied, the area of uncertainty associated with the position of fault(s) responsible for the failure at the process time t3 is less than if the failure was produced at the process time t2, and so on.

With the target process execution, an input space is being filled with real input and an output space is being filled with real output.

With the accumulating of output results, eX Machine, that is built by the methods described further, expands correct algorithm space and decreases uncertain algorithm space. This is so, since the sum of the two is equal to the algorithm space, that is defined at the moment the target process is encoded, and that stays the same while the target process is unchanged.

We are proclaiming the following to be valid during the target process forward execution being analyzed by eX Machine:

a: uncertain algorithm space is constantly decreased with increasing of correct algorithm space.

b: event definition space for any process output event is limited; the limit is an entire algorithm space of the process. Therefore continuously less and less portion of event definition space will be laying within the area of uncertain algorithm space during the forward execution of the target process.

Referring to FIG. 13, if d(e2) is the event definition space of an unexpected output result (e2) at the process time t2, and d(e3) is the event definition space of another unexpected output result (e3), then the areas of fault position uncertainty at the process time t2 and t3 are represented by parts of d(e2) and d(e3), that are shaded by "//".

The area of fault position uncertainty is less at the process time t3 than the corresponding area at the process time t2.

Although, an event definition space is potentially growing with the forward execution of the target process, eX Machine allows for constant minimizing of fault position uncertainty areas.

The results of eX Machine analysis are related to our definition of Correct Process Address (CPA), that is both time sensitive and output results expectation sensitive.

**eX Machine principle of locating fault position or a place for required modification:**

The fault(s), responsible for the failure of an output result, or a place for modification due to a new system requirements, are located within that part of the output result event definition space, that lays within the area of uncertain algorithm space.

When we speak of fault position being limited to several UPAs, we mean, the only modifications allowed are within the mentioned UPAs. Otherwise, the new event definition space must be built by expanding the Algorithm Space, i.e. by creating new PAs. Therefore, our definition of process uncertainty creates the basis for the forward constructing of the target process i.e. the basis for the automated forward program development. It means that with eX Machine it becomes possible to automatically localize the area for building on the existing process in such a manner that we will not undo and destroy what works "correctly" during process maintenance and forward program development.

For example, let's say it took 50 events that took place at 12 process addresses to create output event w(k, b,p). Let's say 45 of these events took place at 10 process addresses, that are known to be correct. Then we have 5 events taking place at two uncertain process addresses involved in the creation of w(k,b,p).

If w(k,b,p) is correct (expected), then those 5 events will be set to be correct (approved) by eX Machine and 2 statements will be upgraded to the status of "correct elementary processes" and their process addresses will be upgraded to the status of CPAs.

If w(k,b,p) was an incorrect (unexpected) result, then the area of uncertaimy of fault position will be those two PAs. That means, that the expected result can be achieved by either: () modification of these two statements or () building a new definition space for this w(k,b,p);

**4 Definition of eX Machine principles of the target process Knowledge Propagation (Knowledge Induction);**

Target process "Knowledge Propagation" or "Knowledge Induction" is the process, that results in the expansion of the Correct Algorithm Space.

The relationships between A,L,D,E,X,*,+,C,!,/,R,=,S and W elements of eX Object Set are such, that "approved" event of W element execution has a power to activate the chain of secondary processes. These secondary processes will "approve" the events of execution of those eX Graph elements that were involved in producing "approved" W-event.

**Definition K1: event "approval"**

- is a process of validating event "correctness" by eX Analytical Engine, where event correctness is defined in P8.

**Definition K2: "control event"**

- is event which will definitely **("unconditional control event")** or potentially **("conditional control event")** alter process direction from falling down according to eX Graph and Reduced Flow Chart.

**Definition K3: "unconditional control event"**

- is an event of execution of rewind or exit terminals {*,+,C,R,=}

**Definition K4: "conditional control event"**

- is an event of execution of L element or evaluation of loop exit condition of D element.

Positive solution of conditional control event will result in the control shift to the right according to eX Graph and Reduced Flow Chart. Negative solution of conditional control event will result in allowing the control to fall down according to eX Graph and Reduced Flow Chart.

**Definition K5: "data manipulation event"**

- is an event of execution of A or E or arithmetic part of D element of eX Object Set;

**Definition K6: "Initial Data Manipulation event"**

- is one of the following: E-event, A-event of data initialization or D-event of the loop index initialization;

**Definition K7: "Secondary Data Manipulation event"**

- is data manipulation event other than Initial Data Manipulation event.

eX Machine allows for accumulation of knowledge on the subject of, what events constitute the "correct" process execution, through building ACB Analyzed Calculation Base.

**THE BASIC PRINCIPLE BEHIND ACB IS THAT THE KNOWLEDGE OF THE "CORRECT" EXECUTION EVENTS MUST BE PRESERVED.**

The **"correctness"** is understood as a POTENTIAL for producing **"correct"** in place, time and value events on the condition of **"correct" input events.** Thus, Analyzed Calculation Base allows to preserve the POTENTIAL of correct" execution.
Building the Analyzed Calculation Base is our implementation of the principle, that we believe is universal for any process: When the target process is producing "correct" output events on the valid input data combination, the knowledge of those events definition spaces must be preserved. The following output events may use, but can not alter event definition space of already approved resulting events (W-events) and, therefore, will not alter previously correct target process execution.

**Definition K8: an elementary "knowledge" on the elementary process (s)**

- is obtained, when we "approve" one of its execution events.

Accumulating the "knowledge" on the elementary process (s), therefore, means accumulating information on (s) "correctness" or its uncertainty within its different execution events;

An elementary "knowledge" of elementary process (s), therefore, consists of the following components:

a - the knowledge of (s) contents correctness;
b - the knowledge of process time (Process Place and Local Time), where an event of (s) execution constituted or did not constitute a "correct" event.

**Definition K9: "Elementary Knowledge Propagation", or "Elementary Knowledge Induction":**

the fact that we know:

a) - the contents, and
b) - the Process Time of an approved event:

allows us to propagate this event's "elementary knowledge" into different Process Addresses by automatically locating and analyzing "ancestor" events all the way back to "Knowledge Propagation Terminal events".

**Definition K10: "Knowledge Propagation Terminal" event (KP terminal)**

- is one of the following two types of events:

1) event, that has no ancestor within the target process, that is an Initial Data Manipulation event;
2) previously approved event;

Previously approved events are stabilizing the process of knowledge propagation and preventing it from becoming increasingly more complex with the accumulation of ancestor events during the target process forward execution. As soon as the "knowledge propagation" process meets a previously approved event, we can be sure that all its ancestor events have been already previously approved.

In the following description of evaluating the "uncertainty" within the target process, that is a "knowledge deduction" process opposite to the "knowledge induction" process described here, the same "knowledge propagation" terminals will become the "uncertainty terminals".

Refer to FIG. 14: on this example there are two W-events: e(a) and e(n) that are represented along with some of their ancestors. W-events are approved in the direction of process execution, shown in FIG. 14 as -->. Only a part of event definition space is shown for each of these two W-events.

Let *e designate a "KP terminal" event, that is an Initial Data Manipulation event, and #*e designate a "KP terminal" event, that is a previously approved event.

On this example, the value of W-event e(a) was calculated from three parameters, whose values were in turn produced by following events: e(b), e(c) and e(d).

The value of e(b) was calculated from two parameters, which values were in turn produced by the events: e (f) and e(g);

Event e(f) does not have any ancestors, since it is an initial data manipulation event and is, therefore, a KP terminal.

Event e(g) was previously approved and, therefore, is also a KP terminal.

We do not attempt to locate the ancestors of KP terminals, since they are either not present, like in the case of e(f) or previously approved, like in the case of e(g). This is were the "terminated induction" principle is based. Since the direction of process execution is from W-event e(a) towards W-event e(n), an event e(i) becomes a KP terminal in the process of propagating elementary knowledge from W-event e(n), that happens later, since e(i) and its ancestors were already approved during the knowledge propagation from e(a).

**THE RULE OF KNOWLEDGE PROPAGATION:**

The process of approving an event generates a secondary process of approving its immediate ancestors, unless:

a) the immediate ancestors are already approved, or

b) absent (in a case, when the event is Initial Data manipulation event)

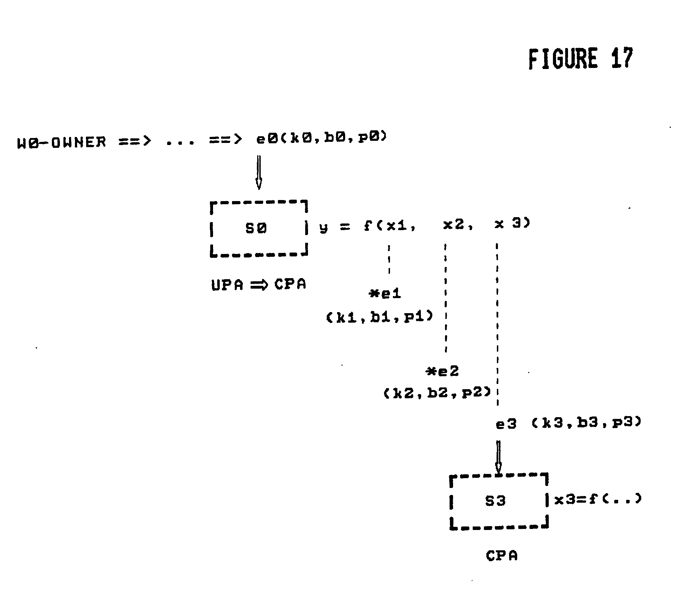

Therefore, the propagation of elementary knowledge, "Knowledge Induction", becomes a chain reaction, which expansion is controlled by the Knowledge Propagation Terminals.
Refer to the example in FIG. 17: Event (e0) that is the Process Time (k0,b0,p0) is the first approved event of (s0) execution, that calculates the value of (y), since the PA of statement (s0) had the status of UPA. Therefore, PA of (s0) is upgraded to CPA.
The immediate ancestors are the events of calculation of the parameters that were involved in the calculation (y) value: x1, x2, x3. Let us say, that the values of x1 and x2 immediately prior to event of (k0,b0,t0) were produced at the Process Times (k1,b1,p1) and (k2,b2,p2). Let's say, that they were previously approved and, therefore, we treat them as a KP terminals, and do not examine their ancestors.
Let's say, that the event of calculating x3 immediately prior to (k0,b0,p0) is (k3,b3,p3) and it was not previously approved. The status CPA merely means, that some other event(s) of this PA execution was (were) previously approved. We will proceed to examine its immediate ancestors, that are the events of calculating x3 parameters, immediately prior to the Process Time (k3,b3,p3). And so on...
The Knowledge Propagation, activated by approved W-events is done in the direction opposite to the direction of target process execution.

**Definition K11: "Immediate Owner" of an event:**

e2 owns e1 if e2 had approved e1;

In FIG. 14 e(i) is owned by e(d) and not by e(o).

**Definition K12: "W-owner" of an event:**

Each approved event (e) has W-owner, that is W-event descendent of (e), which originated the chain of Elementary Knowledge Propagation that approved (e).
Each event can have only one W-owner event and only one Immediate Owner event, where the W-owner event could be, as well, an Immediate Owner of the event
In FIG. 14, the W-owner of e(i) is e(a) and not e(n). W-event, e(a), is the W-owner for e(b),e(f),e(d),e(i),e(k), e(m),e(l);
FIG. 15 shows that, when an event (e) is approved, its PA status is checked and if the status is UPA (Uncertain Process Address), it is upgraded to CPA (Correct Process Address). W-owner event of (e) that is the Process Time {kW,bW,pW} becomes an attribute of that CPA, responsible for upgrading this PA status.
FIG. 16 presents the same Process Address (k,b) at the different Process Times t1, t2, t3, t4, t5. The Process Times t1, t2, t3, t4, and t5 are referring to the execution of some other than (k,b) elements.
Looking at the PA (k,b) from the time t1, we find PA(k,b) at the state of (k,b,0), that is no events of (k,b) execution had yet been produced.
At the process time t2 we will find PA (k,b) at the state (k,b,2), that is (k,b) had experienced two events of its execution. None of them were yet approved. PA(k,b) has a status of UPA.
At the time t3, we find PA (k,b) at the state (k,b,3), i.e. there were 3 events of (k,b) execution: (k,b,1), (k,b,2) and (k,b,3) and event (k,b,2) was approved. The status of (k,b) was upgraded from UPA to CPA with W-owner attribute, that was the W-owner of (k,b,2).
During the further approval of other (k,b) execution events, the W-owner attribute stays unchanged and is the W-owner of (k,b,2).

W-owner attribute of CPA allows to keep the knowledge of the target process up to date during the variations in output results acceptance.

When one of the previously approved W-events is disapproved, the target process knowledge is dropped to the level, determined by the position of the disapproved W-owner event in the target process time. We call this process of eX Machine: **"loosing the knowledge".**

**5 Building eX model of the target process;**

**Definition of the Analyzed Calculation Base (ACB);**

**Building eX Repository of the target process;**

**BUILDING XPD MODEL OF THE TARGET PROCESS:**

Refer to FIG. 7: eX Model is built from eX Graph as a three dimensional based construction, i.e. more dimensions could be added on the base of the mentioned three, where the third dimension is built on the base of the two dimensions of eX Graph.

The third dimension represents a structure, that contains attributes of Process Addresses. Different types of attributes are given to different Process Addresses (PA), i.e. to different {k,b} coordinates, depending on the type of elementary process {A,L,D,W,E,*,/, and so on}, that is stored under this Process Address.

Each element of eX Model, that corresponds to the executable statement, contains three attributes representing the references to:

a) record number of the corresponding statement within the target process;
b) record number of the corresponding statement within eX Repository; and
c) record number of the corresponding statement within the X-Source code;

This establishes the reference between the target process, its eX Model, Repository and X-Source Code.

For each executable process element eX Model keeps an attribute of Local Time;

Binary Address (BA) attribute is presented in the Model for every element of eX Graph;

Return Binary Address (RBA) attribute is presented for all process terminals.

PAs corresponding to rewind terminals (*),(C) or (+) possess an attribute of their Rewind ID (ID/).

ID is used as an alternative to {k,b} presentation of a Process Address. Each pair {k,b} can be represented by one integer value ID, that is the order of that PA on eX Graph space, when passing that space from (k=1,b=1) to (k=MK,b=NB) and incrementing k parameter first.

ID = (b-1)*MK + k ,where MK is maximum k of eX Graph.

Thus, in FIG. 5(A) graph element *1, that is PA(9,1), has an ID=9 and the graph element A4, that is PA(9,2), has an ID=23, since the MK=14.

The following is an example of the implementation of the structure constituting the third dimension of eX Model for process terminal, that is either {*|C|+|R|=}, followed by the example of the implementation of the structure corresponding to executable elements of a target process, that is either: {A|L|D|E|W|X} and alter control statement {S}.

The size of the structures, and the size of its member, are implementation dependent and only the structure members necessary for eX Machine implementation are shown on these examples.

```
| * | ind | ID / | loc.time | BA | targ.r.# | Repos.r.# | X-Source r.# | RBA | ..
```

{ C }
{ + }

```
| R |   |   | loc.time | BA | targ.r.# |   | X-Source r.# |   | ..
```

{ = }

Exit terminals {R,=} do not have the following attributes of rewind terminals: {ind, ID /, Repos.r.#}

ind - is the index of the corresponding process element in eX Frame and eX Graph;

Example of eX Model element corresponding to PA(14,3) from FIG. 5(A):

```
| * | 2 | 6 | loc.time | 11 | targ.r.# | Repos.r.# | X-Source r.# | 2 | ..
```

                represents                    represents
                binary 1011                   binary 10

The local time attribute will be filled at the time of the target process execution.

PAs containing process elements A,L,D,E have "ACB Pointer" attribute, where ACB stands for Analyzed Calculation Base.

```
| A | ind | ACB-ptr | loc.time | BA | targ.r.# | Repos.r.# | X-Source r.# |
```

{ L }
{ D }
{ E }
{ W }
{ X }
{ S }

In addition L and D elements have an attribute defining the value representing the increment in b-coordinate by the positive solution (high potential solution) of L or D:

⎯⎯⎯⎯⎯⎯⎯⎯⎯⎯⎯⎯⎯⎯

...      | shift potential | ...

⎯⎯⎯⎯⎯⎯⎯⎯⎯⎯⎯⎯⎯⎯

ACB-ptr attribute of PA is a pointer to the corresponding ACB construction that contains information on the history of "approved" execution events of the current process element.

**DEFINITION OF THE ANALYZED CALCULATION BASE (ACB):**

the collection of the internal or external memory constructions, each corresponding to a different element of the target process and containing information, that constitutes currently known status of this element behavior as of "approved" or "uncertain" in time, is called in this invention Analyzed Calculation Base (ACB) of the target process.

Each ACB construction corresponds to an executable PA of the target process and can be implemented as an internal variable construction or as a file.

The only rule is, that any member or element of ACB construction represents an event of execution of the target process element corresponding to the construction. The local time of the event is represented by the position within the construction.

The value of the ACB construction element can be set to one of the two states: "on" and "off", where "on" - corresponds to the approved event and "off" - corresponds to the event that is not yet approved (i.e. uncertain).

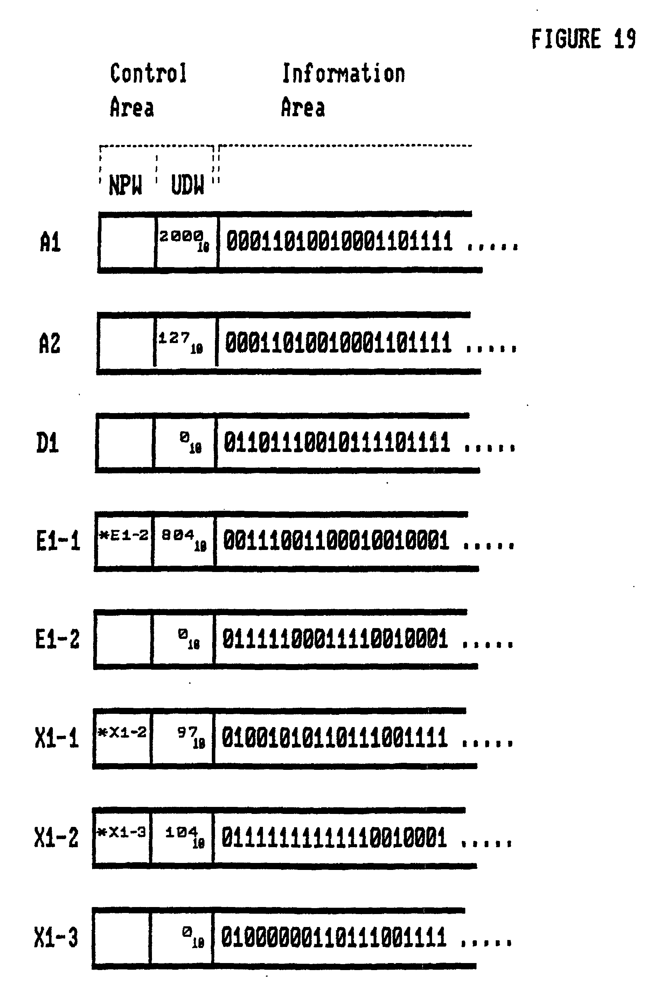

Refer to FIG. 19:

In our implementation ACB-ptr points to a binary file that is divided into two parts. The first is Control Area that keeps two kinds of information: Next Parameter Word (NPW) and Uncertainty Displacement Word (UDW). The second part contains Information Area, that keeps "knowledge state" bits. Each execution event of the element that created this ACB-ptr is represented by a bit in an Information Area, that is a "knowledge state" bit. The position of the bit relative to the beginning of the Information area of the file corresponds to the local time of the event, and the bit is set "on" or "off" corresponding to the present state of "knowledge" of the event "correctness" status.

Different techniques of file compressing could be used. In our implementation UDW keeps the relative displacement of the first bit that is in state 0. Before any event of the element execution is approved, the corresponding UDW is equal to 0, the first bit of Information Area corresponds to the first event of the element execution and no Information Area compression is taken place.

When at some later time UDW is set, for example, to 2000, it would represent that the 1-st bit position of the information area corresponds to the local time 2001, and all the 2000 previous events of that element execution were approved. Therefore, the binary file, corresponding to the mentioned ACB pointer is compressed by shifting 2000 bit positions to the left, since we know, that the first 2000 bit positions would be filled with 1.

The value of UDW may change in both directions during the "Induction of knowledge" or "loosing of knowledge" processes of eX Machine analyzing current target process element. This would be accomplished by the shifting of bits within the Information Area of corresponding ACB construction.

For example, by the time the 1-st and 4-th bit positions of D1 ACB Information Area would change their status to "on" during the "knowledge induction" process, UDW of D1 will be set to decimal 7 and its Information area bits would shift 7 positions to the left.

Each parameter of an input statement {E} and each parameter of a Call statement {X}, is represented by its own ACB construction.

ACB-ptr of the corresponding model element is pointing to the ACB construction corresponding to the first parameter. The Next Parameter Word (NPW) of that construction is pointing to the ACB construction of the next parameter, if it is present, and so on. Otherwise, the NPW is empty.

ACB of a target process, containing five executable elements {A1,A2,D1,E1,X1}, where E1 has two input parameters and X1 has three calling parameters, may look like the one represented by FIG. 19.

**BUILDING eX REPOSITORY OF THE TARGET PROCESS:**

Refer to FIG. 7: eX Repository of the target process is built at the same time as eX Graph (or eX Frame, if this step was implemented). Each element of the Main Branch corresponding to an executable statement (A,L,D,E,W, X,S elements of eX Object Set) is stored at eX Repository file.

The volume of code contained by eX Repository is less than the corresponding target process source code. This is so, since eX Repository does not contain any process control statements, where by process control statements we understand process statements, that do not involve data manipulation or validation, i.e. eX Repository does not contain unconditional branches, stop, return, then, else, endif and so on....

At the time, when the algorithm is extracted from the target process by the previously described "Next Lowest Potential Principle", the control structure is being preserved in the structure of eX Graph and eX Model, built on its basis (FIG 7).

Therefore, eX Repository will contain all the process elements, but not the definition of the process control, that is preserved by eX Model.

| | |
|---|---|
| Example 1: for the target process statement | if (d < 10) go to label |
| the repository will contain | if(d < 10) |
| Example 2: for the target process statement | if(a.gt.b) then |
| | c=d |
| | else |
| | e = f(g) |
| | endif |
| | return |
| the repository will contain | if(a.gt.b) |
| | c=d |
| | e = f(g) |

Each statement of eX Repository is referenced in the attribute of the corresponding Process Address {k,b} within eX Model. For example, if the Repository is kept as the RRDS (Relative Record Data Set), then the corresponding reference attribute must contain the relative record number of the corresponding statement within the Repository. Refer to the mentioned in the paragraph "Building eX Model of the Target Process" Repository record number (Repos.r.#).

**6 Building X-Source code;**

**Minimum overhead instrumentation for capturing target process execution history.**

**Building user- eX Machine-target process interface by the means of Incremental System Output Process Synchronized (ISOPS) map;**

**Building System Input Process Synchronized (SIPS) map;**

**BUILDING THE X-SOURCE CODE**

In order to analyze by eX Machine the target process, being executed from the traditional object code we build the X-Source code from eX Model and from eX Repository of each target process (main program, subroutine or function) of the target system of programs.

The purpose of creating the X-Source code is in instrumenting the synchronization between the target process and eX Machine processes of accumulating the knowledge of the target process behavior. Besides instrumented synchronization signals, X-Source code will potentially differ from the original target process source code in that X-Source code will not contain "dead code", i.e. unreachable code, and in that X-Source code may be potentially restructured according to the original target source code if the second was not structured according to eX Model rules, i.e., for example, if it had extra GO TO's.

Refer to FIG. 7 and FIG. 8:

**X-Source code,** that is generated by the **X-Source Generator** (17 on FIG. 7) from two objects: **eX Model (8 on FIG. 7) and eX Repository (10 on FIG. 7)**, will in turn **"run" XPD Model** through synchronization signals (4), that are passed to eX Interface, that, in turn through signals (6) activates **Analytical Engine,** that **"runs" eX Model** through commands (7).

Since the X-Source code is built from eX Model and eX Repository, which are, in turn, built from the source of the target process, there is one to one functional equivalents between the target process, eX Model and X-Source code.

In order to create X-Source code the following is done:

- the contents of each executable statement for the X-Source are taken from eX Repository (10 on FIG. 7);
- the control statements are constructed from eX Model (8 on FIG. 7);
- the target - model synchronization signals are instrumented;

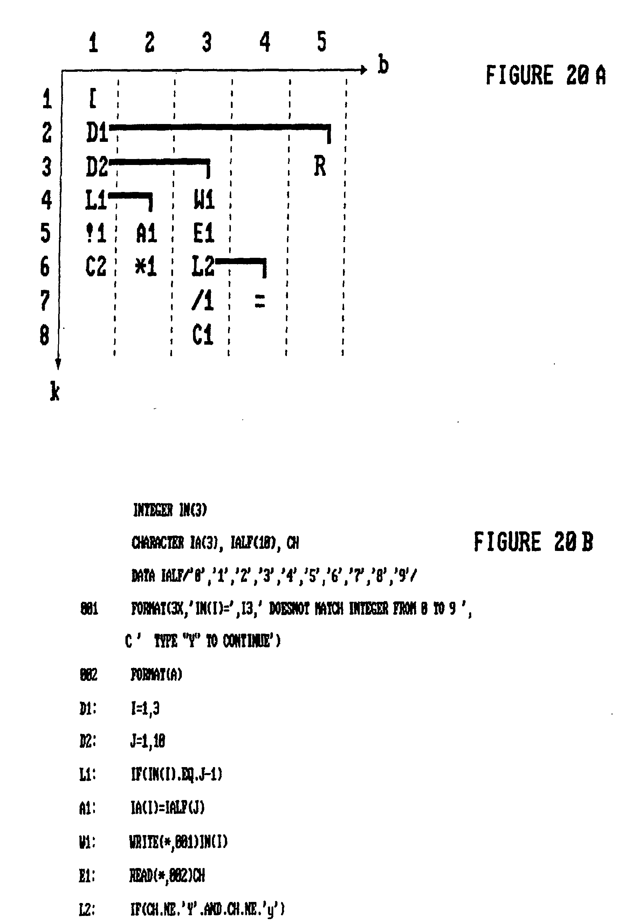

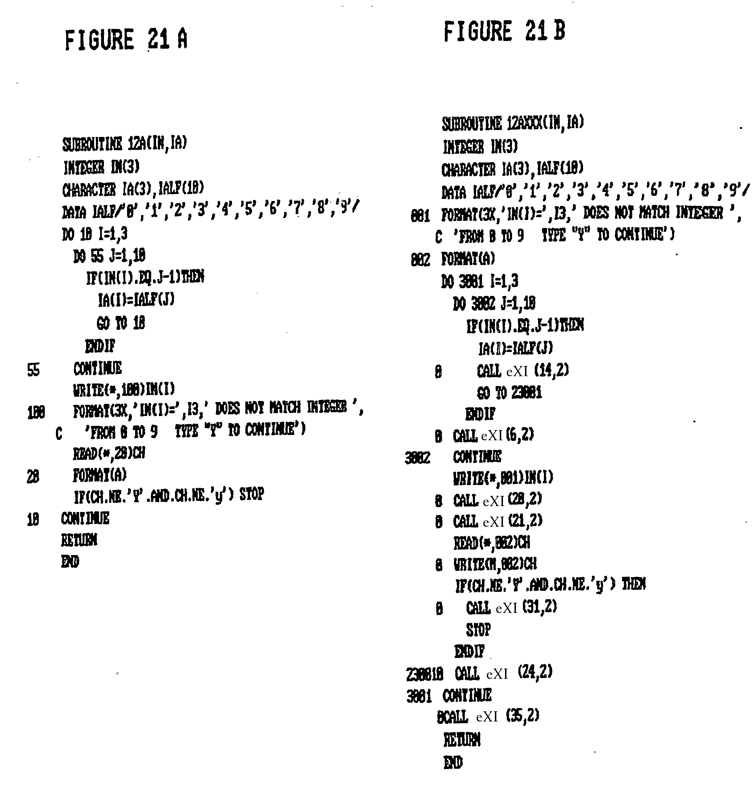

(Refer to example on FIG. 20 and FIG. 21)

We will explain building the synchronization interface between the target process and eX Analytical Engine on the example of the **"Delayed Sequential"** model synchronization, that is defined in the following topic.

The synchronization signals are produced here by CALL statements (4 on FIG. 8), that are passing to eX Interface ( eX I) (11) three parameters: (k,b,m), where {k,b} is a pair that defines the process address, and (m) defines a model of the target process, i.e. it defines which target process is being presently executed.

Instead of three parameters (k,b,m) the interface could be implemented by two parameters: (IDT,m), where IDT is an alternative presentation of the element's process address and is calculated from the (k,b) coordinates of the corresponding terminal, by the previously described formula:

$$IDT = (b-1)*MK + k; \hspace{3cm} (\text{"Formula of ID"})$$

,where MK is maximum k coordinate of the target process model.

## MINIMUM OVERHEAD INSTRUMENTATION FOR CAPTURING TARGET PROCESS EXECUTION HISTORY.

The terminal synchronization call is added in front of each statement representing a Process Terminal (definition F3).

Example from FIG. 4: Assuming that we are building X-Source for the process, that is identified within the system of programs by the model, m = 2, when representing the GO TO terminal (a) from the terminal of branch b=1:

```
call eX I(9,1,2)
go to 'LABEL a'
```

and from the terminal of the branch b=5:

```
call eX I(10,5,2)
go to 'LABEL a'
```

The syntax of 'LABEL a' is different in different programming languages. This method of recording the process execution history represents the minimum overhead (minimum instrumentation), as it will be explained next.

When eXI receives a call, which PA is identified by eXI as a terminal, it records this PA along with {m}, where {m} is described earlier model identifier, in the System Execution History file (3 on FIG. 8).

In our implementation of terminal's synchronization the coordinates of a terminal {k,b} are represented by their IDT's.

Refer to FIG. 8: eX INTERFACE ( eXI) module translates IDT's in pairs (k,b) by the previously described "Formula of ID".

By locating the coordinates (k,b) in the model, eXI module identifies which terminal sent the synchronization signal.

The sequence of executed process terminals is the sufficient and necessary (minimum overhead) information in order to recreate target process behavior history for any given model of a target process.

**Explanation:** within our model, there is only one pass between the START and specific terminal or between an entry of a Rewind ID of the previous terminal and the next terminal. The Rewind ID (ID/) has been stored as an attribute of each terminal of the eX Model, when the model is built.

When eXI receives an information about the next executed terminal, it commands Analytical Engine to retrace the part of the currently executed pass within the target process, that is from the Rewind ID of the previously executed terminal (or from the START, if the currently executed terminal is the first since the process was entered) to the current terminal. Each pass through PA represents its execution event and increments its local time attribute (p) by 1.

For example, let us assume, that the following signals were received by eXI during execution of the X-Source code built from eX Graph in FIG. 4: 45,9,55.

These are the IDTs of the following PAs: {14,3}, {9,1}, {10,4} which tell us, that the target process was executed by the following route:

A1 A2 L1(-) A3 L2(+) A4 X1 D1(+) A6 W1 A3 L2(-) A2 L1(+) W2 E1 L3(-) A7 STOP

To represent repetition of the same terminal, as is often the case in DO, FOR, WHILE, and so on, loops, we use negative number. For example, 27 -5 42 would mean that DO loop D1 took negative decision (went through its body) 6 times (had reached the terminal with IDT=27) before exiting from the DO cycle.

On the previous example we had 3 synchronization signals: 42,9,52 to represent 29 events of the process behavior history. Other options of representing the process history may be either:

- sending the synchronization signal after every executed element, like it is practiced by some debugging packages, which for our example would have to create 29 signals;
    or

- recording the pairs consisting of passed LCs along with their solutions: {L1,0} {L2,1} {D1,1} {L2,0} {L1,1} {L3,0}, that is 12 signals.

We have just demonstrated, that recording the process execution history by recording the sequence of the executed process terminals is the necessary and sufficient information about the target process dynamics. It implements the minimum overhead in both the number of the synchronization signals and the number of instrumentation insertions necessary in order to capture the target process dynamics using traditional object code processing. As we will show further, this instrumentation will not be necessary when using eX Object Code.

## BUILDING USER - eX MACHINE - TARGET PROCESS INTERFACE BY THE MEANS OF INCREMENTED SYSTEM OUTPUT PROCESS SYNCHRONIZED (ISOPS) MAP.

The following describes an interface between a user and a target processes through eX Machine. This interface, as this invention believes, is the highest possible level of interface in order to analyze a target software. eX Machine analysis is activated by a reference to the system output.

It is the system output results that is the reason we write programs. It is the system output results that is the reason we want to modify or fix programs. It is the system output results, existing or not yet existing, that we refer to in our mind when trying to understand an existing process or trying to build a new process. Acceptance of, non acceptance of, or reference to the system results, is - what stands as the very "reason" for process analysis or process construction.

Proposed here techniques allow to communicate to eX Analytical Engine this "reason" as a way to activate the analysis, therefore eliminating further intermediate steps. Described further method allows to build an interface between a user and eX Analytical Engine that is using the system result as a point of reference, like it is done intuitively in order to activate our cognitive analysis by a human being.

Incremented System Output Process Synchronized Map (ISOPS map) is an instrument of reference between output signals and process events produced those signals.

The following is a sample format of ISOPS map. It consists of 5 types of entries {1.2.3.4.5.}

entry 1. defines W-event through {k,b,p,m} process parameters;

entry 2. defines position {sl,sc} (screen line, screen column) of the beginning of current output signal on the sysout screen;

entry 3. define a rectangular on the system output screen {l1,c1,l2,c2}, that is the smallest size rectangular containing the area of the screen changed by the W-event execution;

entry 4. contains an integer information, that is the displacement of the corresponding entry 5. from the beginning of the file containing the changed image information (file combined of entries 5).

entry 5. contains the actual part of the sysout screen buffer that corresponds to the area of entry 3.;

As entry 5 is the image of the changed area of screen buffer and the only variable size record, we keep it in a separate file - Incremental Image Monitor (IIM file on FIG. 8). The other 4 ISOPS map parameters, that correspond to entry 1; entry 2; entry 3; and entry 4 - are kept in ISOPS map parameters file (ISOPS pars. on FIG. 8). Combination of ISOPS parameters file and IIM file represent System Result History (2 on FIG. 8) and (2 on FIG. 7).

## ISOPS map sample format:

| 1. | 2. | 3. | 4. | 5. |
|---|---|---|---|---|
| W-event | screen position | screen area changed | displ. in image monitor file | incremental image monitor file |

\_____ ISOPS parameters file _____/ \\__ IIM file __/

| {k,b,p,m} | {sl,sc} | {l1,c1,l2,c2} | DDDDDD | 'xxxxxxxxxxxxxxxxxx' |
|---|---|---|---|---|
| {k,b,p,m} | {sl,sc} | {l1,c1,l2,c2} | DDDDDD | 'xxxxxx' |
| {k,b,p,m} | {sl,sc} | {l1,c1,l2,c2} | DDDDDD | 'xxxxxxxxxxxxxx' |
| {k,b,p,m} | {sl,sc} | {l1,c1,l2,c2} | DDDDDD | 'xxxxxx' |
| {k,b,p,m} | {sl,sc} | {l1,c1,l2,c2} | DDDDDD | 'xxxxxxxxxxx' |

The following describes the values, used to build ISOPS map:

entry I. describing W-event {k,b,p,m} are obtained as follows: {k,b,m} are the synchronization parameters (4 on FIG. 8), sent to eXI (11 on FIG. 8) by the target process; eXI obtains {p} from model (8), corresponding to {m}, as a current time attribute of the process element structure corresponding to this {k,b} process address. The time attribute is kept current by Analytical Engine (9), as it will be described in the following paragraph.

entry 2. screen (line and column) {sl,sc} position at the beginning of each system output signal is obtained as follows: The {sl,sc} entry is equal {1,1} for the very first W-event entry. When eXI receives a synchronization signal sent by W-event, eXI obtains the current screen position, that is in effect after this W-event execution. This screen position is kept to be used as {sl,sc} entry for the next W-event.

entry 3. is the smallest rectangle that could be drawn on the screen, that would contain the screen area changed from the process time of the previous W-event. This rectangular is defined by Incremental Image Extractor/Constructor (12 on FIG. 8) by comparing the Previous Screen Image (15 on FIG. 8), that is saved at the process time after the previous W-event, and the Current System Output Screen buffer (5 on FIG. 8).

entry 4. is relative byte position of the current entry of Incremental Image Monitor in the IIM file, which position is known by the Incremental Image Extractor/Constructor (IIE/C) (12 on FIG. 8). IIE/C knows the current position, since it knows the length in bytes of each entry to the IIM file.

entry 5. is a current entry to the IIM file, that is the part of the sysout buffer, corresponding to the rectangular of entry 3.

**Building System Input Process Synchronized (SIPS) map;**

SIPS map is built in order to be able to access for analysis or replay a specific input to the system made at specific Process Time. SIPS map is kept in SYSIN History file (1 on FIG. 8) and (1 on FIG. 7). For each system input event an entry is maid to the SYSIN history file. The entry consists of two records. One is the actual input string and the other is set of parameters {k,b,p,m}, describing process time {k,b,p} and model {m} corresponding to the current input string.

eX Interface module (11 on FIG. 8) is creating the entry to the SYSIN history file from the synchronization parameters {ide,m} (4 on FIG. 8) and a system input buffer (m) (19 on FIG. 8). {k,b} is calculated from {ide} by the Formula of ID. parameter {p} is obtained by eXI from the current Process Time within the eX Model.

FIG. 21 has an example of {ide,m} synchronization call CALL eXI(21,2), that is instrumented before the input from the terminal (E1 on FIG. 20). As soon as the system input is known to the target program it is recorded by the instrumented next statement "WRITE(M,002)CH" to the buffer file (m) (19 on 7) and later re-recorded to the SYSIN history file by eXI module. The instrumented statement recording the system input is built by converting the I/O action from "READ" to "WRITE" that is directed to the monitor file {m}.

**7 Example of target process, its eX Model, Repository and X-Source code;**

Refer to FIG. 20, FIG 21 and FIG 7:

FIG. 21 A is a sample subroutine. FIG. 20 A is its eX Graph, that is a basis on which eX Model (8 on FIG. 7) is built. FIG. 20 B is eX Repository (10 on FIG. 7) extracted from the sample subroutine by the described earlier process 18 on FIG. 7. FIG. 21 B is X-Source code built from eX Graph and eX Repository of sample FIG. 21 A by X-source Generator (17 on FIG. 7). X-source contains calls to eX Interface module (11 on FIG. 7) which calls are instrumented before each process terminal (definition F3):

| | |
|---|---|
| CALL eXI(6,2) | CALL eXI(14,2) |
| | CALL eXI(24,2) |
| | CALL eXI(31,2) |
| | CALL eXI(35,2) |
| before each system input signal (Ei from a terminal): | CALL eXI(21,2) |
| and after each sysout signal (Wi): | CALL eXI(20,2) |

, where 6, 14, 24, 31 and 25 are idt of terminals C2,*1,C1, = and R correspondingly, 20 is idw of W1, 21 is ide of E1 and 2 is model ID m, that in our example happened to be equal 2.

The model ID, m, is an integer being assigned in 1-increment order to each independent target process (main procedure, function or subroutine) during extracting its model and Repository by the process 18, Fig. 7.

Mentioned {idt,m) and {idw,m} and {ide,m} are synchronization parameters 4 on FIG. 8.

On FIG. 20 A we see, that BA of rewind terminal entry /1 (1010), is higher in value than BA of corresponding rewind entry * 1 (1001). This still does not contradict earlier defined principles of rewind terminals returning control to process element, that is already represented in a process segment with lower binary address, since the control here is really going to be returned to the entry of a DO loop (element D1), with lower binary address. Although, according to the rules of a DO loop implementation within a programming language, this return of control has to be done through the intermediate step of passing through the DO terminal (element C1), that, in turn, returns control to D1.

**8 "Pseudo parallel" execution of the target process model: "Delayed Sequential" and "Delayed Parallel" eX model execution;**

By execution of eX Model of the target process we understand the process of tracing its Graph according to the execution path of the target process;

**Delayed Sequential execution of eX Model:**

"Delayed Sequential execution of eX Model" is being implemented by CPU(s), that is one or several CPUs switching between two tasks, where one task is the "execution segment" of the target process and the other task is the modeling the first task on eX Model of that process by the eX Analytical Engine, having "execution segment" being defined as a part of the target process located between the following elements of eX Object SET: process entry, points of system input (synchronization {ide,m} and "process terminals" (synchronization {idt,m});

**Delayed Parallel execution of eX Model:**

"Delayed Parallel execution of eX Model" is being implemented by more than one CPU, where the task of the "execution segment" of the target process and the task of modeling of previously executed "execution segments" by the eX Analytical Engine are performed in parallel;

Both, methods of "Pseudo Parallel" execution of eX Model are implemented by synchronization signals from process terminals {idt,m} and system input {ide,m}, but in the first case the implementation of eX Analytical Engine processes is done in the form of CALL statement, where the target process waits for the control to return from the eXI module, and in the second case the parallel processes are activated by the synchronization signals. The synchronization signals {ide,m} and {idt,m} are designed to bring eX Model "up to date" with the target process. The synchronization signals {idw,m} are designed to bring ISOPS map "up to date" with the target process and Process Time within eX Model.

As signals from Process Terminals represent minimum overhead instrumentation, as it was previously discussed, they also represent the minimum overhead synchronization signals in order to keep the Model up to date with the target process. Synchronization at the point of system input is convenient, since during the "operator think time" the target process is interrupted any way.

**9 Running eX Analytical Engine. Building and propagating of Analyzed Calculation Base of cause-effect relationships within the target process; Knowledge Induction;**

Refer to FIG. 8. The following processes occur when eXI (11) receives a synchronization signal, that is implemented in form {id,m} or {k,b,m} (4 on FIG. 8). We will assume the implementation in the form {id,m}. eXI translates {id} in {k,b} of corresponding model {m}, knowing the value of MK of the model m, by earlier described "Formula of ID":

$$b = (id - 1) / mk + 1$$

$$k = id - (b - 1) * mk$$

Process address {k,b} will point to either process terminal (definition F3), then the {id} is {idt}, or sysout signal (W), then the {id} is {idw}, or input from the terminal (E), then id is {ide}, nor other possibility exist;

If eXI received {idt} synchronization parameter, this {idt} is written into System Execution History file (3 on FIG. 8).

If the synchronization signal is {ide,m} or {idt,m}, eXI initiates eX Analytical Engine and the following processes occur:

- eX Analytical Engine will retrace the Model from the point of the previous synchronization signal {k,b}, or from the entry point, to the {k,b} of the current synchronization signal, as it was described previously when we discussed minimum overhead instrumentation for recording process execution history.
- During passing of each element of eX Model, its local time attribute (p) is incremented by 1 and thus being kept current.
- When (Wi) element is met that is a System Output, eX Analytical Engine initiates cycle(s) of "knowledge induction" chains (claim 9) (see **Definition K10: "Knowledge Propagation Terminal"** event (KP terminal) and FIG. 14, where each cycle is originated by a system output parameter, if(Wi) had more, than one output parameter.

Knowledge propagation terminals stabilize the "knowledge induction" processing, that would otherwise become longer and longer chain of secondary process with forward execution of the target process. Correct Algorithm Space is potentially propagated and W-owners events of PA are being established by the knowledge induction processes, see **Definition K12: "W-owner" of an event"** and FIG. 14, FIG. 15, FIG. 16, FIG. 17 and previously described the "RULE OF KNOWLEDGE PROPAGATION".

Every time an execution event status is upgraded from "uncertain" to "correct" by the "knowledge induction process", corresponding bit in the corresponding ACB construct is being upgraded from 0 to 1, thus increasing the knowledge of ACB. (See Definition of ACB and FIG. 19)

During {ide,m} synchronization signal eXI puts a {k,b,p,m} record into SIPS map (I on FIG. 8), where {p} is currently updated by the same synchronization signal and {k,b} are obtained from {ide} by the previously described "Formula of ID".

Refer to FIG. 21 B, statement CALL eXI(21,2): The {k,b,p,m} entry will look {5,3,p,2}, where {p} is currently updated local time attribute, that eXI will get from the Model. The following statement: WRITE(M,002)CH will put on the monitor file (unit M) (19 on FIG. 7) the actual input record. It will be copied from the temporary monitor file (M) onto System input history file next to the synchronization parameter {k,b,p,m} by eXI during the next synchronization signal.

If the synchronization signal came from system output element {idw,m}, eXI initiates process described earlier in order to update ISOPS map, and then returns the control to the target process. While creating {k,b,p,m} parameters of ISOPS map eXI takes local time parameter {p} from corresponding Wi element of the eX Model and increments it by 1, since the {idw,m} signal does not perform the Model synchronization process of eX Analytical Engine.

**10 Activating eX Analytical Engine "knowledge deduction" processes by reference to ISOPS map in order to localize the area of fault positions or place for modifications with constantly decreasing uncertainty;**

The ability to address absolutely any event within the system of programs from the system output is insured by those four coordinates {k,b,p.m}. Being able to access and analyze any event within the system from the system output - something visible to any program user or programmer without referring to the program source code represents original to our invention interface between the user of the analytical tool and the target process.

"Knowledge Deduction": Refer to FIG. 13: Uncertain Algorithm Space is constantly being minimized by the "knowledge induction" processes of eX Analytical Engine previously described. **"Knowledge Deduction"** processes are implemented as follows:

A user of eX Machine is looking at the system output, that is being recreated from the system result history by Incremental Image Extractor/Constructor. By positioning a cursor, mouse or other pointing device at the system result, corresponding {k,b,p,m} parameters of the ISOPS map are being activated.

If referenced system output result is defined to the eX Machine as "unexpected" and therefore incorrect, eX Analytical Engine will start "Knowledge Deduction" processes, that is following the same rules of "knowledge induction" of tracing events in the direction opposite to the target process execution, up to "knowledge propagation terminals" that are called in this case "knowledge deduction terminals". The only difference is that no increase of knowledge is performed on ACB constructs during the process of recovering the "Uncertain Algorithm Space" is a portion of "event definition space" of the questioned output event. The Uncertain Algorithm Space is a combination of UPA addresses on the chains to the "knowledge deduction terminals". On the FIG. 13 it is symbolically presented by // space within the d(e3) event definition space at the process time t3. As it is seen on FIG. 13, the uncertain portion of the event definition space is constantly minimized with constant Algorithm space of the target process and constantly increasing Correct Algorithm Space.

W-owner attribute of CPA allows to keep the knowledge of the target process up to date during the variations in output results acceptance.

When one of the previously approved W-events is disapproved, the target process knowledge is dropped to the level, determined by the position of the disapproved W-owner event in the target process time. We call this process of eX Machine "loosing the knowledge". On the FIG. 13 loosing the knowledge could be understood, within the following scenario:

1. the target process is executed up to process time (t3), which increases Correct Algorithm Space, (CPAs are presented on this FIG by + characters) to the level shown at the process time (t3).
2. later a failure (or need for the result modification) is established with the reference to the result at the process time (t2). The level of knowledge (Correct Algorithm Space) will be dropped to the level showed at the process time (t2). This is done by loosing the status from CPA to UPA for any PA, that had W-owner event having been occurred after process time (t2).

The ability of "loosing the knowledge" makes eX Machine processes flexible and realistic according to the definition of failure being relative to the individual expectations or relative to the changed expectations of one individual or to the changed system specifications.

**11 Interpreting eX Graph and eX Repository;**

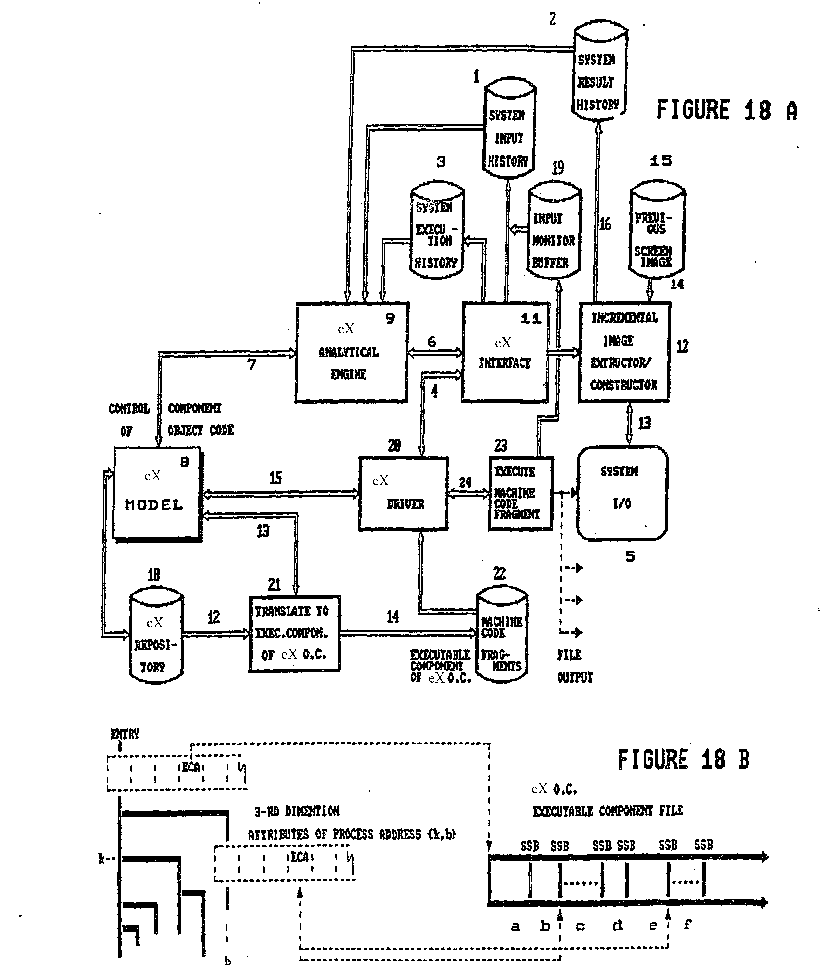

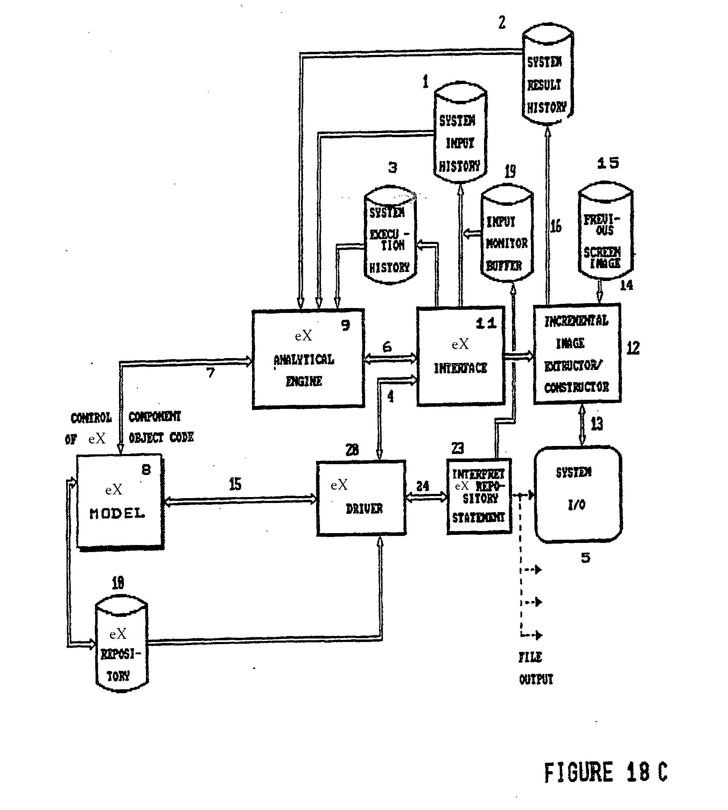

Refer to FIG. 20: The control of the target process is always fully represented by the XPD Graph, that is a two-dimensional basis on which eX Model of the target process is built. The target process may be executed by interpreting statements of eX Repository while executing eX Model by tracing its eX Graph (FIG 18 C). In that implementation the following components of the traditional object code implementation presented on FIG. 7 will not be needed:

- X-Source Generator;
- X-Source code
- Compile and link
- X-object code

Refer to FIG. 18 C: A language interpreter (23) interprets eX Repository statements that eX Driver (20) pulls out of eX Reopsitory while executing (parsing) eX Model. Sygnal (24) from interpreter returns a code that is one of the three values:

(a) eX Repository statement that is not a logic statement (not L or D) is executed;
(b) eX Repository statement that is a logic statement ( L or D) is executed negatively;
(c) eX Repository statement that is a logic statement ( L or D) is executed positively;

eX Driver takes an action accordingl to the code returned when parsing (executing) eX Model.

Refer to FIG. 20 and FIG. 21: eX Driver will produce synchronization signals to the eXI module: {idt,m}, {ide, m} and {idw,m} during execution of eX Model. eXI module will, in turn, activate eX Analytical Engine the same way it is done during Pseudo Parallel eX Model execution. The difference is in that, during Pseudo Parallel eX Model execution "execution segment" is followed by the process of retracing of the same segment on eX Model. During the execution of the target process by the eX Driver, on the controrary, execution of the target process and execution of its eX Model are actually implemented by the same process.

Referring to FIG. 20 A, the following signals could be generated in {id,m} format at different process times:

```
CALL eXI(6,2)
CALL eXI(14,2)
CALL eXI(20,2)
CALL eXI(21,2)
CALL eXI(24,2)
CALL eXI(31,2)
CALL eXI(35,2)
```

or the same in {k,b,m} format:

```
CALL eXI(6,1,2)
CALL eXI(6,2,2)
CALL eXI(4,3,2)
CALL eXI(5,3,2)
CALL eXI(8,3,2)
CALL eXI(7,4,2)
CALL eXI(3,5,2)
```

As in case of any interpreted process, the modifications to the target process are done easier with this method, since no recompilation or re-linking is required. In addition, the modifications to the target process logic and to the target process executable components can be done here separately, which also simplifies the task of modification.

**12 eX Object code and its execution; Execution of eX model as a part of the target process object code;**

Refer to FIG. 18 A : eX Object Code consists of two components:

1. control component represented by eX Graph within eX Model; and
2. executable component represented by translated to machine code eX Repository statements;

In that implementation, as in the case of interpreting eX Graph and eX Repository , the following components of the traditional object code implementation presented on FIG. 7 will not be needed:

- X-Source Generator;
- X-Source code
- Compile and link
- X-object code

Execution of eX Object Code consists of two processes:

1. eX Driver (20) executes eX Model, i.e. traces eX Graph;
2. machine code fragment, that is pre-translated into machine code statement of eX Repository, containing no control instructions, is executed by the process (23), being submitted for execution by eX Driver.

As in the case of interpreting eX Repository statement, eX Driver receives a signal as a result of a code fragment execution and takes the appropriate direction when the signal came from the Logic Statement (L or D element of eX Object Set).

eXI Driver will produce synchronization signals to the module: {idt,m), {ide,m} and (idw,m) during execution of eX Model. eXI module will, in turn, activate eX Analytical Engine the same way it is done during Pseudo Parallel eX Model execution.

The difference is in that, with Pseudo Parallel eX Model execution "execution segment" was followed by the re-tracing of the same segment on Model. During execution of the target process by eX Driver, on the contrary, execution of the target process and execution of its eX Model are actually implemented by the same process.

Referring to FIG. 20 A, the following signals could be generated in {id,m} format at different process times:

```
CALL eXI(6,2)
CALL eXI(14,2)
CALL eXI(20,2)
CALL eXI(21,2)
CALL eXI(24,2)
CALL eXI(31,2)
CALL eXI(35,2)
```

or the same in {k,b,m} format:

```
CALL eXI(6,1,2)
CALL eXI(6,2,2)
CALL eXI(4,3,2)
CALL eXI(5,3,2)
CALL eXI(8,3,2)
CALL eXI(7,4,2)
CALL eXI(3,5,2)
```

Refer to FIG. 18 B:

Executable Component Address (ECA) attribute is added to each executable element PA of eX Model. ECA is the displacement within the Executable Component file of the eX Object Code (22 on FIG. 18A) of the fragment of machine code corresponding to the translated eX Repository statement. Each fragment is followed by the Statement Separator Byte (SSB). eX Driver (20 on FIG. 18) reads the value of ECA from eX Model (8 on FIG. 18 A), reads the corresponding fragment of machine code and passes it for execution by the module (23 on FIG. 18 A), that runs the executable component of eX Object Code.

As one of different methods for monitoring system input, the following is implemented: when module 21 on FIG. 18 translates input from the system terminal into Executable Component of eX Object Code, it adds a next statement, that reverses the action of an input from a system terminal to output on the monitor buffer file (M) (19 on FIG. 18).

For example, from FIG. 21 B:

```
READ (* ,002)CH is followed by
WRITE(M,002)CH
```

eX Driver then has an option to activate or deactivate this second statement in order to control monitoring of the system input while selecting the next code fragment to be passed to the execution process (23).

**13 Recompilation and re-linking of eX Object Code;**

Refer to FIG. 18 A. and 18 B.

The eX Object code architecture consisting of two components: control and executable allows for easier modifying of the target process. When the change is simply in the control - the control component is changed. When the change is in modifying of executable component, than a new entry is maid in the executable component file and the ECA reference in the Control component is updated.

The resolution of link between the control and executable component through the ECA is done at a run time. Therefore the compiling, recompiling or interpreting is needed of only newly created or modified statements of executable component of eX Object Code;

The control component of eX Object Code can be potentially rearranged by insertion, deletion or modification to the eX Graph element corresponding to the newly created eX Repository element.

At some situations, when only the control structure has to be rearranged, a modification to eX Object Code can be done without any changes to the executable component and by simply rearranging the order of the elements within eX Graph.

Modification to the eX Object code can be done at some situations by deactivating the control component element and, therefore, bypassing the corresponding element of the Executable component;

When the resolution of the links between the Control and Executable eX Object code components is implemented at run time, linking or re-linking of a group of two or more target processes implemented by eX Object Code is to be done by linking of only control components of eX Objet Code.

Since eX Machine through its high level interface can address any elementary process, i.e. statement by the reference to the system result and consequent analysis of eX Analytical Engine, there is a way of automatic modification to the target process code without traditional use of compiler for recompilation and linker for re-linking. The control component can be modified automatically by insertion, deletion or rearranging elements within the eX Graph, that is directed by user pointing to the system output Events with a request to rearrange their order, or conditionally or unconditionally activate or deactivate them. The conditions can be derived from the existing system output results by the same method of pointing to the existing system output results and consequent analyzing them by eX Analytical Engine retracing the history of events, as it is done by "knowledge deduction" method.

This is the basis for proposed here method of Result Oriented Programming (ROP), that is a very high level language for forward development of a computer program. In fact the level of this method grows with the forward development of the target process, since there are more and more events to analyze and reuse.

IF external references to called processes are being resolved at a run time and no processes are pre-linked together, so the DLL (Dynamic Link Library) consists of only one process for which eX Model and eX Repository are built, than no recompilation or re-linking is required for process modification, when:

(a) if a new eX Repository statement is to be added, it is selected from already existing for the current process Executable Component elements, or, if it can not be found within the Executable Component, it is being interpreted when activated by the corresponding element of the Control Component;
(b) the Control Component of eX Object Code is automatically edited by eX Machine by the described earlier way of modifying eX Graph.

**14 Implementing eX Machine processes at all stages of testing and production;**

We propose to use eX Machine on any stage of testing or production being implemented by any of the following methods:

eX Machine processes are executed along with execution of target computer processes, having Machine processes being a combination of the following processes:

- "Pseudo parallel" to the target process execution of eX Model within the traditional object code implementation, or
- execution of eX model as a component of the target process object code within eX Object Code implementation;
- "elementary knowledge induction" that is activated by the system output events by propagating this knowledge between the target process elements up to the "knowledge propagation terminals";
- "knowledge deduction" processes, that define the area of uncertainty within the eX Model of the target process;

**15 Result Oriented Programming (ROP)**

A method of Result Oriented Programming (ROP) allows to modify or built upon previously created processes through the Very High level interface and no manual interaction with the process source code, having;

- user interface is being limited to the reference to the existing system results by the ability to reference to SYSOUT events;
- additions or modifications being done automatically by eX Machine processes that reuse event definition spaces of referenced SYSOUT events;

**16 Implementing Program Stethoscope;**

Audio analysis, combined with traditional video (graph) analysis allows for better dynamic understanding of programs or system of programs. Execution of any target process can be seen (heard) as a "music" defined by the process algorithm and is a function of the input data combination.

During a cognitive process of Program Understanding we are faced with a task of "playing computer". This is by the definition a dynamic process. On the other hand a graph (picture) is by definition a static object. The difference between graph and sound representation of dynamic process may be understood by comparing two ways of recreating music: one - by reading the music score (graphic representation) and another - by actually playing the music.

When good musician is reading the score he actually hears the music. The graphical presentation of the score is then amplified by sound, even then it can be heard only by the expert, who is looking at the score.

The static nature of the target process graph can be altered by showing the flow of control through the graph structure elements. This can be implemented by highlighting an element that receives a control and thus moving the last highlight position within the graph. Audio synchronization with process may stay by itself as a process diagnosis mechanism, and it may also be combined with the video effect diagnosis.

Audio effect during a program analysis can be achieved as follows:

1. During parallel or post-life program emulation by applying next recorded terminal address {k,b} to the eX Model of the program we can trace the program execution on eX Graph of program's Algorithm.

2. The video tracing of program execution process will be achieved simply by highlighting the element of the eX Graph that is currently active during the trace.

3. The audio effect is added by calling hardware internal function that allows to generate audio frequency and send it to the speaker. A head phone will be more appropriate addition to the computer when analyzing a system by described method, not to effect other programmers;

The frequency can be calculated as a function of two parameters:

(k,b), where single increment in {k} increments the frequency by one discrete step, and single increment of {b} - increments a frequency by a larger step, for example by an octave. A branch back will accordingly decrement the frequency.

The duration of beep, corresponding to the tracing of one individual element of the eX -RAPH can be set as such that it would be recognized by the human ear.

The effect of such audio execution emulation is such, that each process of program execution has its own "music", depending on that process hard coded structure and input data combination. In case of emulating a loop of large number of iterations, a code signal can be set to indicate such a loop in order to eliminate a necessity of tracing all the iterations.

The effect of Audio Analysis will be such, that the user will be able to listen to the program behavior like a doctor listens to the patient heart beat.

1. When a particular output result is not being observed for an long time, this analysis can be activated to hear:

- is the system dead;
- is the program in loop;
- is it waiting for an input:

(when the last executed element was an input statement a special audio tone can be generated)

2. Most stressful places of the program's algorithm can be heard as a most common frequency and therefore easily identified;

3. The difference in program behavior with different input data combinations can be heard;

4. Special tone can indicate a call to a child function and special tone can indicate a return from the call. The audio analysis can be limited to only those signals originally and expanded optionally to indicate process execution within one specific function, if functionality within it is to be studied.

5. The Audio analysis can be recorded during the process emulation (alive or post-life) and then replayed without the actual mode emulation in both directions forward and backward.

6. It can be replayed synthesized with the replay of the system result and thus give a filling of the intensity of the processing necessary for those results achievement;

7. It can be recorded and replayed for different input data combinations for the same process in order to analyze the difference in intensity of calculations for those different input situations.

Given that the potential for the program fault is a function of the number of the elementary processes involved, this analysis will aid in selection simpler (input-process-output) combination during system evolution to a new specifications.

**Claims**

1. An apparatus for automatic analysis of a target process, wherein the apparatus determines the location of faults contained within the target process or location of modifications within the target process required due to a changed expectation of the result, wherein the apparatus generates a secondary process of accumulating knowledge of the target process functionality through knowledge induction, comprising:

analyzed calculation base (ACB) attribute for each executable element of the target process;
means for executing the target process and said secondary process,
means for said secondary process to build and propagate an elementary knowledge of the target process functionality through knowledge induction that propagates said elementary knowledge through a place and time within the target process,

wherein said elementary knowledge indicates a knowledge about or an uncertainty about the correctness of an effect of the target process element execution event and,
wherein said elementary knowledge is recorded within said ACB and,
wherein the location of fault responsible for a specific failure or location of modification within the target process required due to changed expectation of a result is obtained through knowledge deduction that uses said elementary knowledge generated by said knowledge induction to define said location as a constantly minimized area of uncertainty within the result's event definition space, said knowledge deduction following the same rules of knowledge induction of tracing events in the direction opposite to the target process execution.

2. The apparatus of claim 1, wherein the target process is implemented by execution of code in traditional object code form, while synchronization signals are sent from the target process to said secondary process.

3. The apparatus of claim 1, wherein the target process is implemented by a driver tracing a model of the target process and presenting corresponding executable elements of the target process represented in their source code form to a language interpreter, while said secondary process is activated by said driver.

4. The apparatus of claim 1, wherein the target process is implemented by a driver tracing a model of the target process, such model built on the control elements of the target process, and presenting corresponding non-control elements of the target process, represented in their machine code form, to the computer operating system, while said secondary process is activated by said driver.

5. The apparatus of claim 1, further comprising means for constructing the definitions of modifications within the target process, required due to the changed expectation of the result, wherein said definitions are obtained by reusing event definition spaces of the prior results of the target process.

6. A method for automatic analysis of a target process, comprising:

determining the location of faults contained within the target process or location of modifications within the target process required due to a changed expectation of the result;
generating a secondary process of accumulating knowledge of the target process functionality through knowledge induction;
establishing an analyzed calculation base (ACB) attribute for each executable element of the target process;
executing the target process and said secondary process;
executing said secondary process that builds and propagates an elementary knowledge of the target process functionality through knowledge induction that propagates said elementary knowledge through a place and time within the target process, wherein said elementary knowledge indicates a knowledge about or an uncertainty about the correctness of an effect of the target process element execution event;
recording said elementary knowledge within said ACB; and
obtaining the location of fault responsible for a specific failure or location of modification within the target process required due to changed expectation of a result through knowledge deduction the uses said elementary knowledge generated by said knowledge induction to define said location as a constantly minimized area of uncertainty within the result's event definition space, said knowledge deduction following the same rules of knowledge induction of tracing events in the direction opposite to the target process execution.

**Patentansprüche**

1. Vorrichtung zur automatischen Analyse eines Zielprozesses, wobei die Vorrichtung den Ort von im Zielprozess enthaltenen Fehlern oder den Ort von Modifikationen innerhalb des Zielprozesses aufgrund einer veränderten Ergebniserwartung bestimmt, wobei die Vorrichtung einen sekundären Prozess des Akkumulierens von Wissen zur Zielprozessfunktionalität durch Wissensinduktion erzeugt, umfassend:

ein Analyseberechnungsbasis-Attribut (ACB) für jedes ausführbare Element des Zielprozesses;

Mittel zum Ausführen des Zielprozesses und des sekundären Prozesses,

Mittel für den sekundären Prozess, um ein elementares Wissen zur Zielprozessfunktionalität durch Wissensinduktion aufzubauen und zu verbreiten, die das elementare Wissen durch einen Platz und eine Zeit innerhalb des Zielprozesses verbreiten,

wobei das elementare Wissen ein Wissen oder eine Unsicherheit über die Korrektheit eines Effekts des Zielprozesselementausführungsereignisses anzeigt, und
wobei das elementare Wissen innerhalb des ACB aufgezeichnet ist und
wobei der Ort des für ein spezifisches Versagen verantwortlichen Fehlers oder der Ort der Modifikation innerhalb des aufgrund veränderter Ergebniserwartung benötigten Zielprozesses durch Wissensdeduktion erhalten wird, die das durch die Wissensinduktion erhaltene elementare Wissen verwendet, um den Ort als einen fortwährend minimierten Bereich von Unsicherheit innerhalb des Ereignisdefinitionsraums des Ergebnisses zu definieren und die Wissensdeduktion denselben Regeln der Wissensinduktion des Verfolgens von Ereignissen in der zur Zielprozessausführung entgegengesetzten Richtung folgt.

2. Vorrichtung nach Anspruch 1, wobei der Zielprozess durch das Ausführen von Code in traditioneller Objekt-Code-Form implementiert ist, während Synchronisationssignale vom Zielprozess zum sekundären Prozess gesendet werden.

3. Vorrichtung nach Anspruch 1, wobei der Zielprozess durch einen Treiber implementiert ist, der ein Modell des Zielprozesses verfolgt und entsprechende ausführbare Elemente des Zielprozesses, die in ihrer Quellcode-Form repräsentiert sind, einem Sprachinterpreter präsentiert, während der sekundäre Prozess durch den Treiber aktiviert wird.

4. Vorrichtung nach Anspruch 1, wobei der Zielprozess durch einen Treiber implementiert ist, der ein Modell des Zielprozesses verfolgt, wobei solch ein Modell auf die Steuerelemente des Zielprozesses aufbaut, und entsprechende, in ihrer Maschinencodeform repräsentierte Nichtsteuerelemente des Zielprozesses dem Computerbetriebssystem präsentiert, während der sekundäre Prozess durch den Treiber aktiviert wird.

5. Vorrichtung nach Anspruch 1, weiterhin umfassend Mittel zum Konstruieren der Definitionen von Modifikationen innerhalb des Zielprozesses, die aufgrund der veränderten Ergebniserwartung benötigt werden, wobei die Definitionen durch Wiederverwenden der Ereignisdefinitionsräume der vorigen Ergebnisse des Zielprozesses erhalten werden.

6. Verfahren zur automatischen Analyse eines Zielprozesses, umfassend:

Feststellen eines Fehlerorts, der im Zielprozess enthalten ist, oder eines Orts von Modifikationen innerhalb des Zielprozesses, die aufgrund von veränderter Ergebniserwartung notwendig sind;

Erzeugen eine sekundären Prozesses des Akkumulierens von Wissen zur Zielprozessfunktionalität durch Wissensinduktion;

Etablieren eines Analyseberechnungsbasis-Attributs (ACB) für jedes ausführbare Element des Zielprozesses;

Ausführen des Zielprozesses und des sekundären Prozesses;

Ausführen des sekundären Prozesses, der ein elementares Wissen zur Zielprozessfunktionalität durch Wissensinduktion aufbaut und verbreitet, der das elementare Wissen durch einen Platz und eine Zeit innerhalb des Zielprozesses verbreitet, wobei das elementare Wissen ein Wissen oder eine Unsicherheit über die Korrektheit eines Effekts des Zielprozesselementausführungsereignisses anzeigt;

Aufzeichnen des elementaren Wissens innerhalb der ACB; und

Erhalten des für ein spezifischen Versagen verantwortlichen Fehlerorts oder des Modifikationsorts innerhalb des aufgrund veränderter Ergebniserwartung benötigten Zielprozesses durch Wissensdeduktion, die das durch die Wissensinduktion erhaltene elementare Wissen verwendet, um den Ort als einen fortwährend minimierten Bereich von Unsicherheit innerhalb des Ereignisdefinitionsraums des Ergebnisses zu definieren und die Wissensdeduktion denselben Regeln der Wissensinduktion des Verfolgens von Ereignissen in der zur Zielprozessausführung entgegengesetzten Richtung folgt.

**Revendications**

1. Dispositif pour l'analyse automatique d'un processus cible, dans lequel le dispositif détermine l'emplacement de fautes contenues dans le processus cible ou l'emplacement de modifications dans le processus cible requis, en raison d'un changement anticipé du résultat, dans lequel le dispositif génère un processus secondaire d'accumulation de connaissances des fonctionnalités du processus cible par connaissance induite, comprenant :

   un attribut de base de calcul analysé (BCA) pour chaque élément exécutable du processus cible ;
   des moyens pour exécuter le processus cible et ledit processus secondaire,
   des moyens pour que ledit processus secondaire crée et propage une connaissance élémentaire des fonctionnalités du processus cible par induction de connaissance propageant ladite connaissance élémentaire par un emplacement et un temps dans le processus cible,

   dans lequel ladite connaissance élémentaire indique une connaissance ou une incertitude à propos de la véracité d'un effet d'un événement de l'exécution d'un élément du processus cible et,
   dans lequel ladite connaissance élémentaire est enregistrée dans ladite DCA et,
   dans lequel l'emplacement de faute responsable d'un échec spécifique ou l'emplacement de modification dans le processus cible requis en raison d'une anticipation changée d'un résultat est obtenu par déduction de connaissance utilisant ladite connaissance élémentaire générée par ladite induction de connaissance pour définir ledit emplacement comme une zone constamment minimisée d'incertitude dans l'espace de définition d'événement du résultat, ladite déduction de connaissance suivant les mêmes règles d'induction de connaissance d'événements de suspension dans la direction opposée à l'exécution du processus cible.

2. Dispositif selon la revendication 1, dans lequel le processus cible est implémenté par exécution de code sous forme de code objet traditionnel, tandis que des signaux de synchronisation sont adressés depuis le processus cible vers ledit processus secondaire.

3. Dispositif selon la revendication 1, dans lequel le processus cible est implémenté par un pilote traçant un modèle du processus cible et présentant des éléments exécutables correspondants du processus cible représenté dans leur forme de code source à un interpréteur de langage, tandis que ledit processus secondaire est activé par ledit pilote.

4. Dispositif selon la revendication 1, dans lequel le processus cible est implémenté par un pilote traçant un modèle du processus cible, ce modèle étant créé sur des éléments de contrôle du processus cible, et présentant des éléments hors contrôle correspondants du processus cible, représentés sous leur forme de code machine, au système d'exploitation de l'ordinateur, tandis que ledit processus secondaire est activé par ledit pilote.

5. Dispositif selon la revendication 1, comprenant en outre des moyens pour créer les définitions des modifications dans le processus cible, requis en raison d'une anticipation changée du résultat, dans lequel lesdites définitions sont obtenues en réutilisant des espaces de définition d'événement des résultats antérieurs du processus cible.

6. Procédé pour l'analyse automatique d'un processus cible, comprenant les étapes consistant à :

   déterminer l'emplacement de fautes contenues dans le processus cible ou l'emplacement de modifications dans le processus cible requis en raison d'une anticipation changée du résultat ;
   générer un processus secondaire d'accumulation de connaissances des fonctionnalités du processus cible par induction de connaissance ;
   établir un attribut de base de calcul analysé (BCA) pour chaque élément exécutable du processus cible ;
   exécuter le processus cible et ledit processus secondaire ;
   exécuter ledit processus secondaire qui crée et propage une connaissance élémentaire des fonctionnalités du processus cible par induction de connaissance propageant ladite connaissance élémentaire par un emplacement et un temps dans le processus cible, dans lequel ladite connaissance élémentaire indique une connaissance ou une incertitude à propos de la véracité d'un effet de l'événement d'exécution d'un élément du processus cible ;

enregistrer ladite connaissance élémentaire dans ladite BCA ; et

obtenir l'emplacement de faute responsable pour un échec spécifique ou l'emplacement de modification dans le processus cible requis en raison d'une anticipation changée d'un résultat par déduction de connaissance utilisant ladite connaissance élémentaire générée par ladite induction de connaissance pour définir ledit emplacement comme une zone constamment minimisée d'incertitude dans l'espace de définition d'événement du résultat, ladite déduction de connaissance suivant les mêmes règles d'induction de connaissance d'événements de suspension dans la direction opposée à l'exécution du processus cible.

EP 0 699 320 B1

FIGURE 1

FIGURE 2

[A/A(L/A(L*VAX(DACVAW*))UWE(LA=VA*))$
1121123221 413151 61232 21237  8121

# FIGURE 3

EXAMPLE:

IF (Q) S1,S2,S3

CAN BE REDUCED TO:

IF(Q.LT.0) GO TO S1
IF(Q.EQ.0) GO TO S2
GO TO S3

THAT IS :

IS REDUCED TO :

## FIGURE 4

# FIGURE 5 A

# FIGURE 5 B

FIGURE 6

```
P1
IF (L1) THEN
  P3
ELSE
  P2
ENDIF
P4
```

```
P1 (L1 P2 !2 P4 *1 V P3 *2)
      i                    i
```

EP 0 699 320 B1

FIGURE 7

58

## eX – MACHINE OPERATION

FIGURE  8

FIGURE 9

entry

L1

rk7

rk1 /1

L2

Si 100

rkq /q

L3

Se

rk2

a

1

/2

L4

/4

/6

rk4
rk6
rk3

/3

2

L5

b

3    4

101

SJ

c

L6

EXIT    6

7

| b →1 | 2 | 3 | 4 | 5 | 6 | 7 →b |
|---|---|---|---|---|---|---|

k

| | | b →1 | 2 | 3 | 4 | 5 | 6 | 7 →b |
|---|---|---|---|---|---|---|---|---|
| EXIT ACC. IND. | orig. | 0 | 0 | 0 | 0 | 1 | 0 | 0 |
| | end | 1 | 0 | 0 | 0 | 1 | 0 | 1 |
| PVP rk | orig. | rk1 | rk2 | rk3 | rk4 | 0 | rk6 | rk7 |
| | end | rk1 | rk2 | rk2 | rk2 | 0 | rk2 | rk7 |
| BA | orig. | 10 | 1001 | 10010 | 10011 | 0 | 10011 | 10 |
| | end | 10 | 1001 | 1001 | 1001 | 0 | 1001 | 10 |
| RBA | | 10 | 1001 | 10010 | 10011 | 0 | 10011 | 10 |
| TBA | | 1000 | 10010 | 100110 | 100111 | 1010 | 1011 | 11 |

# FIGURE 10 A

# FIGURE 10 B

# FIGURE 14

Process direction ➡

We(a)

We(n)

**FIGURE 11**

DESIGN
OF
PROCESS (a)
STEPS

PROCESS (c)
IMPLE-
MENTATION
(CODING)

EXPECTED
INPUT (i)
SPACE

EXPECTED
OUTPUT (f)
SPACE

PROCESS
OPERATION
(i) (a) (o)

**FIGURE 12**

r(t)

EXPECTED                    UNEXPECTED

ASENT        PRESENT        ABSENT              PRESENT

(f 1)                                            (f 2)

CORRECT      INCORRECT
VALUE        VALUE

             (f 3)

FIGURE 13

# FIGURE 15

W-event e => e => e => e ..

(kw,bw,pw)

UPA    CPA    UPA

CPA            CPA

(kw,bw,pw)    (kw,bw,pw)

Correct
Algorithm
Space

propagating

Correct Algorithm Space

# FIGURE 16

(t 1)    (t 2)    (t 3)    (t 4)    (t 5)

W owner of #e2    W owner of #e2    W owner of #e2

UPA
(k,b)

UPA
(k,b)

CPA
(k,b)

CPA
(k,b)

CPA
(k,b)

e1  e2    e1  #e2  e3    #e1 #e2  e3    #e1 #e2 #e3  e4

# FIGURE 17

W0-OWNER ==> ... ==> e0(k0,b0,p0)

```
+----------+
|   S0     | y = f(x1,    x2,    x 3)
+----------+
                       |      |      |
UPA => CPA             |      |      |
                      *e1     |      |
                   (k1,b1,p1) |      |
                              |      |
                             *e2     |
                          (k2,b2,p2) |
                                     |
                              e3 (k3,b3,p3)
```

```
+----------+
|   S3     | x3=f(..)
+----------+
```

CPA

EP 0 699 320 B1

FIGURE 18 A

FIGURE 18 B

FIGURE 18 C

FIGURE 19

Control
Area

Information
Area

NPW | UDW

A1  | | $2000_{10}$ | 0001101001000110111 .....

A2  | | $127_{10}$ | 0001101001000110111 .....

D1  | | $0_{10}$ | 0110111001011110111 .....

E1-1 | *E1-2 | $804_{10}$ | 001110011000100010001 .....

E1-2 | | $0_{10}$ | 011111000111100010001 .....

X1-1 | *X1-2 | $97_{10}$ | 010010101101110011111 .....

X1-2 | *X1-3 | $104_{10}$ | 011111111111110010001 .....

X1-3 | | $0_{10}$ | 010000000110111001111 .....

FIGURE 20 A

```
        1     2     3     4     5
                                          b
   1    [
   2    D1─────────────────────────┐
   3    D2─────────┐           R
   4    L1───┐     W1
   5    !1   A1    E1
   6    C2   *1    L2───┐
   7              /1    =
   8              C1
   k
```

FIGURE 20 B

```
        INTEGER IN(3)

        CHARACTER IA(3), IALF(10), CH

        DATA IALF/'0','1','2','3','4','5','6','7','8','9'/

001     FORMAT(3X,'IN(I)=',I3,' DOESNOT MATCH INTEGER FROM 0 TO 9 ',

        C ' TYPE "Y" TO CONTINUE')

002     FORMAT(A)

D1:     I=1,3

D2:     J=1,10

L1:     IF(IN(I).EQ.J-1)

A1:     IA(I)=IALF(J)

W1:     WRITE(*,001)IN(I)

E1:     READ(*,002)CH

L2:     IF(CH.NE.'Y'.AND.CH.NE.'y')
```

69

## FIGURE 21 A

```
      SUBROUTINE 12A(IN,IA)
      INTEGER IN(3)
      CHARACTER IA(3),IALF(10)
      DATA IALF/'0','1','2','3','4','5','6','7','8','9'/
      DO 10 I=1,3
        DO 55 J=1,10
          IF(IN(I).EQ.J-1)THEN
            IA(I)=IALF(J)
            GO TO 10
          ENDIF
55      CONTINUE
        WRITE(*,100)IN(I)
100     FORMAT(3X,'IN(I)=',I3,' DOES NOT MATCH INTEGER ',
     C  'FROM 0 TO 9   TYPE "Y" TO CONTINUE')
        READ(*,20)CH
20      FORMAT(A)
        IF(CH.NE.'Y'.AND.CH.NE.'y') STOP
10    CONTINUE
      RETURN
      END
```

## FIGURE 21 B

```
      SUBROUTINE 12AXXX(IN,IA)
      INTEGER IN(3)
      CHARACTER IA(3),IALF(10)
      DATA IALF/'0','1','2','3','4','5','6','7','8','9'/
001   FORMAT(3X,'IN(I)=',I3,' DOES NOT MATCH INTEGER ',
     C  'FROM 0 TO 9   TYPE "Y" TO CONTINUE')
002   FORMAT(A)
      DO 3001 I=1,3
        DO 3002 J=1,10
          IF(IN(I).EQ.J-1)THEN
            IA(I)=IALF(J)
     0      CALL eXI (14,2)
            GO TO 23001
          ENDIF
     0  CALL eXI (6,2)
3002    CONTINUE
        WRITE(*,001)IN(I)
     0  CALL eXI (20,2)
     0  CALL eXI (21,2)
        READ(*,002)CH
     0  WRITE(N,002)CH
        IF(CH.NE.'Y'.AND.CH.NE.'y') THEN
     0    CALL eXI (31,2)
          STOP
        ENDIF
23001   CALL eXI (24,2)
3001  CONTINUE
     0CALL eXI (35,2)
      RETURN
      END
```